(19) Europäisches Patentamt
European Patent Office
Office européen des brevets

(11) **EP 2 911 284 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
*H02M 3/158* *(2006.01)*   *H02J 3/38* *(2006.01)*
*H02J 1/12* *(2006.01)*

(21) Anmeldenummer: **15000517.1**

(22) Anmeldetag: **23.02.2015**

(54) **Schaltungsanordnungen und Verfahren zum Abgreifen elektrischer Leistung von mehreren Modulsträngen**

Switch assemblies and method for picking up electric power from multiple module strands

Circuits et procédé de détection de la puissance électrique de plusieurs enroulements de module

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2014 DE 102014002592**

(43) Veröffentlichungstag der Anmeldung:
**26.08.2015 Patentblatt 2015/35**

(73) Patentinhaber: **Karlsruher Institut für Technologie 76131 Karlsruhe (DE)**

(72) Erfinder:
• **Gommeringer, Mario 78333 Stockach (DE)**
• **Schmitt, Alexander 76137 Karlsruhe (DE)**

• **Kolb, Johannes 75236 Kämpfelbach (DE)**

(74) Vertreter: **Müller-Boré & Partner Patentanwälte PartG mbB Friedenheimer Brücke 21 80639 München (DE)**

(56) Entgegenhaltungen:
**EP-A1- 2 104 200      EP-A2- 2 166 638
EP-A2- 2 207 248      US-A1- 2012 043 818
US-A1- 2012 161 527    US-A1- 2013 076 135**

• **LICCARDO F ET AL: "Interleaved dc-dc Converters for Photovoltaic Modules", CLEAN ELECTRICAL POWER, 2007. ICCEP '07. INTERNATIONAL CONFERENCE ON, IEEE, PI, 1. Mai 2007 (2007-05-01), Seiten 201-207, XP031115872, ISBN: 978-1-4244-0631-9**

**Beschreibung**

Die Erfindung betrifft eine Schaltungsanordnung und ein Verfahren zum Abgreifen elektrischer Leistung von mehreren Modulsträngen.

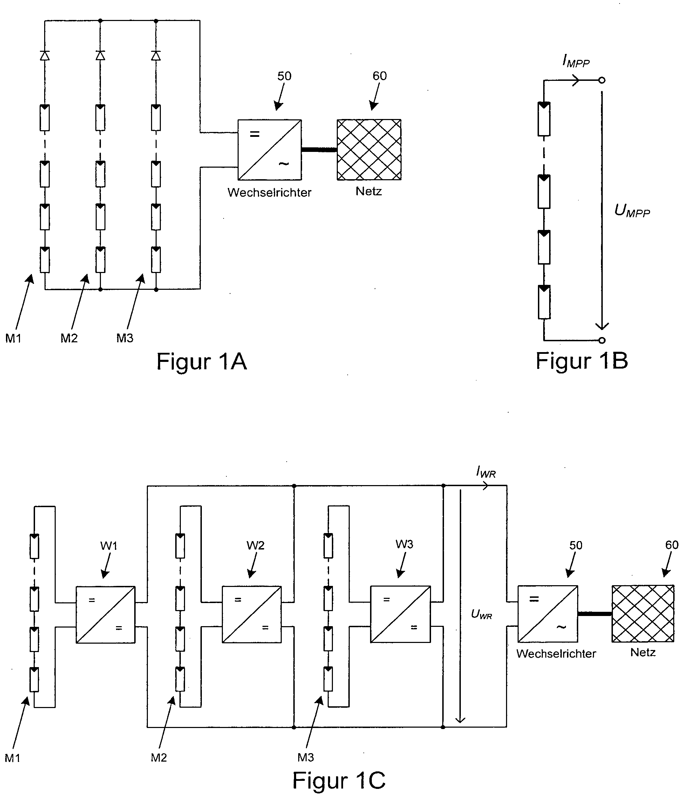

Eine derartige Schaltungsanordnung lässt sich beispielsweise einsetzen, um photovoltaisch erzeugte Energie ins Stromnetz einzuspeisen. Größere Solaranlagen werden oft mit einem zentralen Wechselrichter ausgeführt, der von mehreren Modulsträngen gespeist wird. Figur 1A zeigt eine entsprechende Schaltungsanordnung, bei der drei Modulstränge M1, M2 und M3 einer Solaranlage parallel geschaltet sind. Die Modulstränge M1, M2 und M3 speisen einen Wechselrichter 50, der den von den Solarmodulen erzeugten Gleichstrom in einen Wechselstrom umwandelt, der in das Stromnetz 60 gespeist werden kann.

Bevorzugt befindet sich jeder Modulstrang M1, M2 und M3 im Punkt maximaler Leistungsabgabe (MPP: maximum power point), um die maximale Leistung von den Modulsträngen abzugreifen. Ein Modulstrang im Punkt maximaler Leistungsabgabe ist in Figur 1B exemplarisch gezeigt, bei dem der Modulstrang die maximale Leistung $P_{MPP}$ als Produkt aus der Spannung im Punkt maximaler Leistung $U_{MPP}$ und dem Strom im Punkt maximaler Leistung $I_{MPP}$ liefert. Die individuellen Spannungen und Ströme der einzelnen Modulstränge können sich von Strang zu Strang durch Teilverschattung, durch Temperaturunterschiede, durch verschiedene Ausrichtungen der Solarmodule und/oder durch eine unterschiedliche Anzahl von in Serie geschalteten Modulen unterscheiden. Sind die Modulstränge direkt parallel geschaltet, wie im Schaltbild der Figur 1A gezeigt, führen unterschiedliche Spannungen im Punkt maximaler Leistungsabgabe $U_{MPP}$ in den Modulsträngen zu Leistungseinbußen am Wechselrichter 50.

Um die individuellen Spannungen, mit denen die Modulstränge betrieben werden, aufeinander abzugleichen, werden die einzelnen Modulstränge manchmal über zusätzliche DC-DC-Wandler W1, W2 und W3 an den zentralen Wechselrichter 50 angeschlossen. Eine entsprechende Schaltungsanordnung ist in Figur 1C gezeigt. Über die DC-DC-Wandler W1, W2 und W3 werden die individuellen Modulstrangspannungen an den einzelnen Modulsträngen M1, M2 und M3 auf einen gemeinsamen Spannungswert hoch- bzw. tiefgesetzt, auf den Wert der Wechselrichterspannung $U_{WR}$ für den Wechselrichter 50. An den DC-DC-Wandlern W1, W2 und W3 entstehen dabei zusätzliche Leistungsverluste. Zudem verursachen die DC-DC-Wandler Kosten.

Dokument US 2012/161527 betrifft für Solarmodulstränge vorgesehene Schaltungen, die eine Anpassung zwischen Solarmodulstrangspannungen und einer Ausgangsspannung ermöglichen. Dabei wird ein kleiner Teil der Leistungen der Solarmodulstränge über einen Sperrwandler ("Flyback-Converter") geführt, der die Ausgangsspannung bzw. einen Ausgangsstrom etwas erhöht. Dadurch sollen ein Bauteilaufwand und Verluste gegenüber konventionellen Hochsetzstellern verringert werden.

Dokument "Interleaved dc-dc Converters for Photovoltaic Modules" von Liccardo F. et al betrifft ein System, das aus mehreren konventionellen Hochsetzstellern besteht. Jedem der Hochsetzsteller ist ein Solarmodulstrang zugeordnet. Für die konventionellen Hochsetzsteller wird ein Verfahren zur phasenversetzten Taktung beschrieben.

Der Erfindung liegt die Aufgabe zugrunde, eine verbesserte Schaltungsanordnung zum Abgreifen von elektrischer Leistung von mehreren Modulsträngen bereitzustellen, bei der Leistungsverluste reduziert werden und/oder die Kosten für die Schaltungsanordnung reduziert werden.

Diese Aufgabe wird durch die Gegenstände der unabhängigen Ansprüche gelöst.

Bevorzugte Ausführungsformen sind Gegenstände der abhängigen Ansprüche.

Ein Aspekt betrifft eine Schaltungsanordnung zum Abgreifen von elektrischer Leistung mehrerer Modulstränge mit Leistungsversorgungsmodulen, wobei die Modulstränge jeweils eine individuelle Modulstrangleistung, einen individuellen Modulstrangstrom und eine individuelle Modulstrangspannung bereitstellen können.

Bei der Schaltungsanordnung liegt zumindest ein erster elektrischer Potentialpunkt von jedem Modulstrang an einem gemeinsamen ersten Ausgangspotentialpunkt. Eine Anpassschaltung weist mehrere separate Eingänge auf, an denen ein zweiter elektrischer Potentialpunkt von jedem Modulstrang anliegt. Die Anpassschaltung steuert und/oder regelt an ihrem Ausgang einen angepassten zweiten Ausgangspotentialpunkt so, dass ein Ausgangsstrom der Anpassschaltung im Wesentlichen der Summe der individuellen Modulströme entspricht und eine Ausgangsspannung der Anpassschaltung zwischen der höchsten individuellen Modulstrangspannung und der niedrigsten individuellen Modulstrangspannung liegt.

Bei den individuellen Modulstrangleistungen, Modulstrangströmen und Modulstrangspannungen handelt es sich dabei um die tatsächlich von den einzelnen Modulsträngen bereitgestellten (z.B. produzierten) elektrischen Leistungen, die direkt, also ohne zwischengeschalteten Tief- oder Hochsetzsteller abgegriffen werden. Die individuellen Modulstrangleistungen, individuellen Modulstrangströme und/oder individuellen Modulstrangspannungen können somit als zunächst ungeregelte und/oder ungestellte Werte ausgebildet sein. Die einzelnen Werte dieser Größen können sich voneinander unterscheiden, weswegen sie mit dem Zusatz "individuell" versehen sind. Der Zusatz "individuell" kann bedeuten, dass diejenige spezielle physikalische Größe einem bestimmten Modulstrang aus der Mehrzahl der Modulstränge zugeordnet ist und direkt von diesem erzeugt wird. Die individuellen physikalischen Größen sind voneinander unabhängig. Bei den individuellen Modulstrangleistungen, den individuellen Modulstrangströmen und den individuellen Modulstrangspannungen kann es sich dabei insbesondere um Modulstrangleistungen, Modulstrangströme und Modulstrangspannungen in ihrem jeweiligen Punkt maximaler Leistungsabgabe (MPP) handeln.

Am gemeinsamen ersten Ausgangspotentialpunkt liegt jeder Modulstrang mit zumindest einem ersten elektrischen Potentialpunkt an, z.B. dem Minus- oder Pluspol des Modulstrangs. Alternativ kann auch ein Mittenpotential als erster Potentialpunkt jedes Modulstrangs auf dem gemeinsamen Ausgangspotential liegen. Der erste elektrische Potentialpunkt wird von jedem der Modulstränge direkt abgegriffen, ohne dass ein Steller zwischengeschaltet ist.

Die Anpassschaltung weist mehrere separate Eingänge auf, d.h. die Eingänge sind elektrisch voneinander getrennt. Damit liegen die zweiten elektrischen Potentialpunkte der einzelnen Modulstränge (z.B. Plus- oder Minuspol) nicht an einem gemeinsamen Potentialpunkt, sondern sind elektrisch voneinander getrennt angeordnet. Die Anpassschaltung weist für den zweiten Potentialpunkt jedes Modulstrangs zumindest einen eigenen Eingang auf, weswegen die Anpassschaltung mindestens so viele Eingänge aufweist, wie Modulstränge angeschlossen werden sollen. Die zweiten elektrischen Potentialpunkte der Modulstränge werden ebenfalls direkt abgegriffen, ohne einen Steller zwischenzuschalten. Zusätzlich kann die Anpassschaltung noch Eingänge für den ersten elektrischen Potentialpunkt der Modulstränge aufweisen, die jedoch nicht elektrisch voneinander getrennt sein müssen.

Die Anpassschaltung steuert und/oder regelt den Ausgangsstrom und die Ausgangsspannung, d.h. sie passt den Ausgangsstrom und die Ausgangsspannung an bzw. stellt diese auf einen entsprechenden Ausgangswert ein. Der Ausgangsstrom und die Ausgangsspannung sind dazu vorgesehen, von einem Wechselrichter abgegriffen zu werden bzw. in diesen eingespeist zu werden. Der Wechselrichter wandelt den Strom in Wechselstrom um und speist ihn z.B. in das öffentliche Stromnetz ein. Alternativ oder zusätzlich zu dem Wechselrichter können auch ein oder mehrere Batterieladegeräte, Elektrolyseure, DC-DC-Steller usw. zum Abgreifen der Ausgangsspannung vorgesehen sein. Insbesondere kann die Anpassschaltung für einen bidirektionalen Energieaustausch ausgelegt sein, um z.B. bei der Verwendung von Batterien oder anderen Energiespeichern eingesetzt zu werden.

Die Anpassschaltung kann einen oder zwei Gleichspannungszwischenkreise aufweisen. Ein äußerer erster Gleichspannungszwischenkreis kann die Ausgangsspannung bereitstellen. Über einen internen zweiten Gleichspannungszwischenkreis können die intern an der Anpassschaltung anliegenden individuellen Modulstrangspannungen geregelt und/oder gesteuert werden.

Die Modulstränge weisen mehrere Leistungsversorgungsmodule auf, d.h. ein einzelner Modulstrang kann ein oder mehrere Leistungsversorgungsmodule aufweisen. Als Modulstränge sind insbesondere Solarmodulstränge vorgesehen, die jeweils eine bestimmte Anzahl von Solarmodulen aufweisen. Die Schaltungsanordnung ist auch zum Abgreifen elektrischer Leistung von Brennstoffzellen und/oder Batterien als Leistungsversorgungsmodule geeignet.

Allgemein eignet sich die Schaltungsanordnung zum Abgreifen elektrischer Ladung, von Strom- und/oder Spannungsquellen. Dabei können sich die Spannungen und/oder Ströme an den einzelnen Modulsträngen voneinander unterscheiden.

Die Anpassschaltung regelt und/oder steuert den Ausgangsstrom derart, dass er im Wesentlichen der Summe der Modulströme entspricht. "Im Wesentlichen" bedeutet dabei, dass der Ausgangsstrom nicht exakt der Summe der Modulstrangströme entsprechen muss. Der Ausgangsstrom weicht jedoch nicht mehr als maximal 5%, bevorzugt maximal 1% von der Summe der maximal auftretenden individuellen Modulströme ab.

Der Ausgangsstrom kann in einer Ausführungsform auch einen negativen Wert aufweisen, z.B. wenn Leistung von der Wechselspannungsseite zur Gleichspannungsseite transportiert wird, z. B. beim Aufladen von Batteriesträngen.

Die Schaltungsanordnung ermöglicht ein Abgreifen von elektrischer Leistung von den einzelnen Modulsträngen, die sich im Punkt der maximalen Leistungsabgabe befinden können und unabhängig voneinander Spannung und Strom produzieren. Die einzelnen Modulstränge sind ohne jeweils zugeordneten DC-DC-Wandlern ausgebildet. Dadurch werden Leistungsverluste reduziert, insbesondere gegenüber konventionellen Schaltungen. Weiterhin kommt die Schaltungsanordnung mit günstigeren Leistungshalbleitern aus, die für niedrigere Spannungen ausgelegt sind. Weiterhin kann die Schaltungsanordnung passive Komponenten, insbesondere Drosseln und Kondensatoren verwenden, die für kleine Spannungszeitflächen ausgelegt und deswegen billiger sind.

Bevorzugt handelt es sich bei den individuellen Modulstrangspannungen um Modulstrangspannungen im Punkt der maximalen Leistungsabgabe, wodurch die Schaltungsanordnung nahezu die gesamte Leistung, die von Modulsträngen erbracht wird, abgreifen kann.

Die Anpassschaltung kann zwischen einen Wechselrichter und mehreren Modulsträngen geschaltet sein. Die Schaltungsanordnung kann dabei nur die Anpassschaltung umfassen und dazu ausgebildet sein, an mehrere Modulstränge sowie einen Wechselrichter angeschlossen zu werden. Dazu kann die Anpassschaltung die mehreren separaten Eingänge für die zweiten elektrischen Potentialpunkte der Modulstränge aufweisen sowie zumindest einen Ausgang für den angepassten zweiten Ausgangspotentialpunkt. Die Schaltungsanordnung kann alternativ sowohl die Anpassschaltung als auch einen ausgangsseitigen Wechselrichter und/oder die mehreren Modulstränge umfassen, die an die Eingänge der Anpassschaltung angeschlossen sind. Die Anpassschaltung kann einen gemeinsamen Eingang für die ersten elektrischen Potentialpunkte der Modulstränge sowie einen Ausgang für den gemeinsamen ersten Ausgangspotentialpunkt aufweisen.

Der Ausdruck "Steuern und/oder Regeln" umfasst den englischen Begriff "controlling". Das Steuern und/oder Regeln kann insbesondere durch einen oder zwei Gleichspannungzwischenkreise erfolgen.

Bevorzugt ist die Schaltungsanordnung dazu vorgesehen, zwischen die einzelnen Modulstränge und ein Stromnetz (bzw. einen anderen elektrischen Leistungsempfänger) geschaltet zu werden und weist deswegen lediglich Eingänge für elektrische Leitungen der Modulstränge auf. Ein Wechselrichter kann dabei am Ausgang der Anpassschaltung angeordnet sein oder in diese integriert sein. Er kann auch als separates Bauteil zwischen der Anpassschaltung und dem Stromnetz vorgesehen sein.

Gemäß einer Ausführungsform stellt die Anpassschaltung eine gepulste Taktung für zumindest einen elektrischen Schalter bereit, mit der der Zufluss der elektrischen Modulstrangleistungen über die zweiten Potentialpunkte der Modulstränge zu den Anpassschaltung geregelt und/oder gesteuert wird. Der oder die Schalter kann/können durch Pulsbreitenmodulation getaktet sein. Die elektrischen Schalter, die gepulst getaktet werden, können dabei Schaltern in Wechselrichtern, Gleichrichtern und/oder DC-DC-Wandlern ähneln und aus ähnlichen elektrischen Komponenten aufgebaut sein. Der oder die Schalter können als Leistungshalbleiter mit zum Beispiel zwei Verbindungspfaden realisiert werden, zum Beispiel durch MOSFETs, IGBTs, JFETs, Bipolartransistoren und/oder Dioden. Die elektrischen Schalter schließen dabei gezielt die zweiten elektrischen Potentiale der Modulstränge an weitere interne Schaltungselemente der Anpassschaltung an. Durch die gepulste Taktung wird gesteuert und/oder geregelt, welches der zweiten elektrischen Potentiale wie lange an welchem internen Potential der Anpassschaltung anliegt. Dies dient zum Einstellen und/oder Regeln des angepassten zweiten Ausgangspotentials der Anpassschaltung. Dadurch kann die Anpassschaltung einen Gleichspannungszwischenkreis bereitstellen, an dem die Ausgangsspannung abgegriffen werden kann.

In einer Weiterbildung dieser Ausführungsform ist parallel zu jedem Modulstrang ein dem Modulstrang zugeordneter Kondensator angeordnet, der die individuelle Modulstrangleistung des zugeordneten Modulstrangs zu den Zeitpunkten der gepulsten Taktung zwischenspeichert, an denen vom jeweiligen Modulstrang der individuelle Modulstrangstrom nicht zur Anpassschaltung fließt. Der zugeordnete Kondensator ist als Modulstrangzwischenspeicherkondensator ausgebildet. Die im Modulstrangzwischenspeicherkondensator zwischengespeicherte elektrische Energie kann zu den Zeitpunkten an die Anpassschaltung abgegeben werden, an denen der elektrische Schalter den Modulstrang mit einem internen elektrischen Bauelement der Anpassschaltung verbindet. Dadurch geht zu keinem Zeitpunkt elektrische Energie des Modulstrangs verloren. Die individuelle Modulstrangleistung, die individuelle Modulstrangspannung und der individuelle Modulstrangstrom jedes Modulstrangs können sich dabei ergeben aus der gerade im Modulstrang erzeugten elektrischen Leistung zusammen mit der zusätzlich im zugeordneten Modulstrangzwischenspeicherkondensator gespeicherten elektrischen Leistung. Dies kann insbesondere auch für die individuelle Modulstrangleistung, -spannung usw. im Punkt der maximalen Leistungsabgabe gelten.

In einer Weiterbildung der Ausführungsform weist die Anpassschaltung zumindest ein Glättungselement auf, dass die getaktet über den jeweiligen zweiten Potentialpunkt an der Anpassschaltung anliegenden individuellen Modulstrangspannungen auf einen Wert der Ausgangsspannung am Ausgang der Anpassschaltung regelt und/oder steuert, der zwischen der höchsten individuellen Modulstrangspannung und der niedrigsten individuellen Modulstrangspannung liegt. Das Glättungselement kann dabei als ein elektrisch induktives Element ausgebildet sein, zum Beispiel als Speicherdrossel, als Spule, als Kondensator, als LCL-Schaltkreis und/oder als Filter. Das Glättungselement glättet den Ausgangsstrom und/oder die Ausgangsspannung am Ausgang der Anpassschaltung. Die Ausgangsspannung kann auf einen Wert geglättet werden, der von den einzelnen individuellen Modulstrangspannungen abhängt. Insbesondere kann jedem Modulstrang ein Modulstrangglättungselement der Anpassschaltung zugeordnet sein. Die Glättung kann insbesondere in Verbindung mit einem Ausgangskondensator erfolgen.

Gemäß einer Ausführungsform ist zumindest ein Kondensator zwischen dem angepassten zweiten Ausgangspotentialpunkt und dem gemeinsamen ersten Ausgangspotentialpunkt angeordnet. Der Kondensator kann parallel zu dem ersten und zweiten Ausgangspotentialpunkt als Ausgangskondensator ausgebildet und angeordnet sein, so dass parallel zum Ausgangskondensator die Gesamtleistung der Schaltungsanordnung von einem Wechselrichter abgegriffen werden kann. Der Ausgangskondensator kann zur Glättung der Ausgangsspannung dienen, insbesondere in dem Ausführungsbeispiel, in dem die Anpassschaltung elektrische Schalter mit gepulster Taktung aufweist.

Gemäß einer Ausführungsform ist die Schaltungsanordnung dafür ausgebildet, die individuellen elektrischen Modulstrangleistungen der Modulstränge abzugreifen, wobei die individuellen Modulstrangspannungen der Modulstränge sich dem Wert nach voneinander unterscheiden. An die Anpassschaltung müssen demnach keine geregelten bzw. gestellten Modulstrangspannungen angelegt werden, wie dies durch die DC-DC-Wandler W1, W2 und W3 in der Schaltung erfolgt, die in Figur 1C gezeigt ist. Die Anpassschaltung ist dazu ausgelegt und vorgesehen, an den mehreren separaten Eingängen mit den zweiten elektrischen Potentialpunkten der Modulstränge verbunden zu werden, wobei sich diese zweiten elektrischen Potentialpunkte voneinander unterscheiden.

Gemäß einer Ausführungsform ist die Schaltungsanordnung dafür ausgebildet und vorgesehen, die individuellen Modulstrangleistungen der Modulstränge jeweils in ihrem Punkt maximaler Leistungsabgabe abzugreifen. Dazu können die zweiten elektrischen Potentialpunkte der Modulstränge ohne einen zwischengeschalteten Steller, insbesondere ohne DC-DC-Wandler, an den dafür vorgesehenen Eingängen der Anpassschaltung anliegen.

Gemäß einem Ausführungsbeispiel regelt und/oder steuert die Anpassschaltung die Ausgangsspannung auf einen Wert, der variabel in Abhängigkeit von den individuellen Modulstrangspannungen ist. Die Anpassschaltung steuert und/oder regelt die Ausgangsspannung auf einen Wert, der zwischen der höchsten und niedrigsten individuellen Modulstrangspannung liegt. Die individuellen Modulstrangspannungen können abhängig von äußeren Gegebenheiten sein, bei Solarmodulsträngen zum Beispiel bei einer Schattenbildung, insbesondere bei Tage im Vergleich zur Nacht, bei wechselnden Temperaturen usw. Demnach ändern sich über die Zeit auch die momentan von den Modulsträngen abgegebenen elektrischen Modulstrangleistungen, insbesondere die individuellen Modulstrangspannungen. Dabei kann sich der Modulstrang ändern, von dem aktuell die maximale individuelle Modulstrangspannung und die minimale individuelle Modulstrangspannung bereitgestellt wird. Abhängig davon sowie von den eventuell ebenfalls zugeschalteten weiteren Modulsträngen mit dazwischenliegenden individuellen Modulstrangspannungen ändert sich auch der Wert der Ausgangsspannung, auf den die Anpassschaltung die elektrischen Modulstrangleistungen regelt. Die Anpassschaltung liefert somit keine konstant gehaltenen Ausgangsspannungen. Alle gebräuchlichen Wechselrichterschaltungen sind normalerweise problemlos in der Lage, mit einer leicht veränderlichen Eingangsspannung zu arbeiten. Die Variationen halten sich im Rahmen dessen, was gebräuchliche Wechselrichterschaltungen vertragen. Gebräuchliche Wechselrichterschaltungen sind normalerweise auch für einen Direktanschluss eines einzelnen Modulstrangs geeignet. Somit handelt es sich bei der Ausgangsspannung und dem Ausgangsstrom im Wesentlichen um eine Gleichspannung und einen Gleichstrom, deren aktuelle Werte jedoch über die Zeit langsam variieren können.

Gemäß einer Ausführungsform steuert und/oder regelt die Anpassschaltung die Ausgangsspannung so, dass sie zwischen dem gemeinsamen ersten Ausgangspotentialpunkt und dem angepassten zweiten Ausgangspotentialpunkt abgreifbar ist. Die Spannung liegt somit zwischen dem ersten und zweiten Ausgangspotentialpunkt, während der Ausgangsstrom vom ersten zum zweiten oder umgekehrt fließt.

In einer dazu alternativen Ausführungsform ist die Anpassschaltung zweiteilig aufgebaut, mit

- einem ersten Anpassschaltungsteil mit mehreren separaten Eingängen, an denen die zweiten elektrischen Potentialpunkte von jedem der Modulstränge anliegen, wobei der erste Anpassschaltungsteil den angepassten zweiten Ausgangspotentialpunkt einstellt und/oder regelt, und

- einem zweiten Anpassschaltungsteil mit mehreren separaten Eingängen, an denen dritte elektrische Potentialpunkte von jedem der Modulstränge anliegen, wobei der zweite Anpassschaltungsteil einen angepassten dritten Ausgangspotentialpunkt einstellt und/oder regelt. Dabei steuert und/oder regelt die zweiteilige Anpassschaltung die Ausgangsspannung zwischen dem angepassten zweiten Ausgangspotentialpunkt und dem angepassten dritten Ausgangspotentialpunkt.

Dementsprechend fließt auch der Ausgangsstrom zwischen dem zweiten und dritten Ausgangspotentialpunkt.

Gemäß einer Ausführungsform ist der Ausgang der Anpassschaltung an einen DC-AC-Wechselrichter angeschlossen. Insbesondere können die Ausgangsspannung und der Ausgangsstrom an den DC-AC-Wechselrichter angeschlossen sein, und somit zum Beispiel am gemeinsamen ersten Ausgangspotentialpunkt und am angepassten zweiten Ausgangspotentialpunkt. Der DC-AC-Wechselrichter kann als Teil der Schaltungsanordnung ausgebildet sein, oder die Schaltungsanordnung weist Anschlüsse für den DC-AC-Wechselrichter auf.

Gemäß einer Ausführungsform ist die Anpassschaltung für zwei Modulstränge ausgebildet und weist einen DC-DC-Steller auf, der zwischen die zweiten elektrischen Potentialpunkte der beiden Modulstränge geschaltet ist. Die Schaltungsanordnung kann in diesem Ausführungsbeispiel für genau zwei Modulstränge vorgesehen und ausgebildet sein. Ein DC-DC-Steller ist dabei zwischen die zweiten elektrischen Potentialpunkte der Modulstränge so geschaltet, dass er an seinem Ausgang den angepassten zweiten Ausgangspotentialpunkt regelt und/oder steuert. Dieser DC-DC-Steller hat lediglich Spannungen der Größenordnung der Differenz der beiden individuellen Modulstrangspannungen zu schalten und kann daher weniger leistungsstark ausgebildet sein als einer der DC-DC-Wandler W1, W2 und W3, die in der in der Figur 1C gezeigten Schaltungsanordnung verwendet werden. Diese DC-DC-Wandler W1, W2 und W3 müssen im Gegensatz dazu dafür ausgebildet und vorgesehen sein, über die volle individuelle Modulstrangspannung die jeweilige Spannung zusammen mit dem jeweiligen Strom zu wandeln bzw. stellen. Deswegen müssen die DC-DC-Wandler W1, W2 und W3 leistungsstärkere Komponenten aufweisen. Mit dieser Ausführungsform wird es somit ermöglicht, leistungsschwächere DC-DC-Wandler bzw. DC-DC-Steller zu verwenden.

Gemäß einer Ausführungsform weist die Anpassschaltung für jeden der Modulstränge ein Induktionselement auf, zum Beispiel eine Speicherdrossel, eine Spule, etc. Das Induktionselement kann als Modulstranginduktionselement ausgeordnet sein, z.B. als Modulstrangdrossel. Das Induktionselement dient zum Drosseln und/oder Glätten der individuellen Modulstrangströme.

Gemäß einer Ausführungsform weist die Anpassschaltung für jeden der Modulstränge einen getakteten Schalter auf, über den der zweite elektrische Potentialpunkt jedes Modulstrangs an einen von zwei internen Potentialpunkten der Anpassschaltung angelegt wird. Dabei regelt und/oder steuert die Anpassschaltung den angepassten zweiten Ausgangspotentialpunkt mittels der zwei internen Potentialpunkte. Die Potentialdifferenz zwischen den beiden internen Potentialpunkten kann dabei insbesondere von derselben Größenordnung wie die Differenz zwischen der maximalen und minimalen individuellen Modulstrangspannung sein. Die Differenz der beiden internen Potentialpunkte kann sich zum Beispiel maximal 50%, bevorzugt um maximal 20%, besonders bevorzugt um maximal 10% von der Potentialdifferenz zwischen der maximalen und minimalen individuellen Modulstrangspannung unterscheiden. Insbesondere kann sich die Differenz der beiden internen Potentialpunkte zum Beispiel maximal 50%, bevorzugt um maximal 20%, besonders bevorzugt um maximal 10% von der Potentialdifferenz zwischen der maximalen und minimalen individuellen Modulstrangspannung zuzüglich der an den Bauelementen der Anpassschaltung auftretenden Spannungsabfälle unterscheiden. Für entsprechende Spannungen sind die entsprechenden Bauteile der Schaltungsanordnung ausgelegt. Das erste interne Potential der Anpassschaltung kann als Plus- bzw. Minuspotential ausgebildet sein, das im Wesentlichen der maximalen individuellen Modulstrangspannung entspricht. Das zweite interne Potential kann als Mittenpotential ausgebildet sein, das im Wesentlichen der minimalen individuellen Modulstrangspannung entspricht.

Über den oder die getakteten Schalter können die zweiten Potentialpunkte der Modulstränge auf eines oder auch keines der beiden internen Potentialpunkte gelegt werden, bzw. mit diesen verbunden werden. Die Anpassschaltung kann zusätzlich induktive oder kapazitive elektrische Bauelemente aufweisen, die zwischen die beiden internen Potentialpunkte und die zweiten elektrischen Potentialpunkte der Modulstränge geschaltet sind.

Die beiden internen Potentialpunkte können als Elemente eines internen Gleichspannungszwischenkreises der Anpassschaltung ausgebildet sein.

In einer Weiterbildung dieser Ausführungsform in der die Anpassschaltung auch für jeden der Modulstränge ein Induktionselement aufweist, schaltet die Anpassschaltung das Induktionselement jedes Modulstranges über den zugehörigen Schalter an eines der beiden internen Potentialpunkte der Anpassschaltung.

Dabei kann die Spannung zwischen den beiden internen Potentialpunkten im Wesentlichen die Differenz zwischen der höchsten individuellen Modulstrangspannung und der niedrigsten individuellen Modulstrangspannung betragen.

Gemäß einer Ausführungsform ist die Anpassschaltung modular ausgebildet, das heißt die Anzahl der separaten Eingänge kann durch eine geringe Anzahl verschiedener leistungselektronischer Bausteine beliebig erweitert werden. Dabei kann die Anpassschaltung für jeden Modulstrang ein Strangschaltungsteilmodul aufweisen, sowie ein Ausgangsschaltungsteilmodul am Ausgang der Anpassschaltung. Die einzelnen Module sind in einer beliebigen Anzahl miteinander verbindbar, wobei die Anpassschaltung ein Ausgangsschaltungsteilmodul aufweist und zumindest ein Strangschaltungsteilmodul. Zusätzliche Strangschaltungsteilmodule können in beliebiger Anzahl vorhanden sein. Die Anpassschaltung ist so für eine beliebige vorbestimmte Anzahl von Modulsträngen vorgesehen und ausgebildet.

Ein zweiter Aspekt betrifft ein Verfahren zum Abgreifen von elektrischer Leistung mehrerer Modulstränge, wobei die Modulstränge jeweils eine individuellen Modulstrangleistung, einen individuellen Modulstrangstrom und eine individuelle Modulstrangspannung bereitstellen; mit den Schritten:

- Bereitstellen eines gemeinsamen ersten Ausgangspotentialpunkt, an dem zumindest ein erster elektrischer Potentialpunkt jedes der Modulstränge anliegt;
- Steuern und/oder Regeln eines zweiten elektrischen Potentialpunkts von jedem der Modulstränge zu einem angepassten zweiten Ausgangspotentialpunkt derart, dass

   - ein Ausgangsstrom bereitgestellt wird, der im Wesentlichen der Summe der individuellen Modulströme entspricht und
   - eine Ausgangsspannung bereitgestellt wird, die im Wesentlichen zwischen der höchsten individuellen Modulstrangspannung und der niedrigsten individuellen Modulstrangspannung liegt.

Die Ausgangsspannung kann aufgrund von auftretenden Verlusten in bestimmten Betriebsbereichen auch kleiner als die niedrigste individuelle Modulstrangspannung sein.

Das Verfahren dient insbesondere zum Ansteuern einer Schaltungsanordnung gemäß dem ersten Aspekt.

Die Erfindung wird im Folgenden anhand von in Figuren gezeigten Ausführungsbeispielen näher beschrieben. Einzelne Merkmale der in den Figuren gezeigten Ausführungsformen lassen sich mit anderen erfindungsgemäßen Ausführungsformen kombinieren. Es zeigen:

Figur 1A      in einem Schaltbild parallel geschaltete Modulstränge an einem Wechselrichter gemäß dem Stand der Technik;

Figur 1B      in einem Schaltbild einen einzelnen Modulstrang in seinem Punkt der maximalen Leistungsabgabe;

Figur 1C      in einem Schaltbild mehrere Modulstränge mit jeweils einem DC-DC-Wandler an einem gemeinsamen Wechselrichter gemäß Stand der Technik;

Figur 2      in einem Schaltbild eine Anpassschaltung, die mehrere Modulstränge an einen Wechselrichter anschließt;

Figur 3 in einem Schaltbild mehrere Modulstränge an einzelnen, separaten Eingängen einer Anpassschaltung;

Figur 4 in einem Schaltbild eine zweiteilige Anpassschaltung zum Anschließen mehrere Modulstränge an einen Wechselrichter mit einem Mittenanschluss;

Figur 5A in einem Schaltbild schematisch abstrahiert eine Schaltungsanordnung gemäß einem ersten Ausführungsbeispiel;

Figur 5B in einem detaillierteren Schaltbild die in Figur 5A gezeigte erste Ausführungsform einer Schaltungsanordnung;

Figur 5C den Schaltplan aus Figur 5B, in dem der Stromfluss gemäß erstem Ausführungsbeispiel hervorgehoben wurde;

Figur 5D in einem Schaltbild eine Schaltungsanordnung gemäß der ersten Ausführungsvariante mit mehreren Modifikationsmöglichkeiten;

Figur 5E in einem Schaltplan eine Modifikationsmöglichkeit eines Schaltelements der ersten Ausführungsform;

Figur 6A einen schematisch abstrahierten Schaltplan einer zweiten Ausführungsvariante einer Schaltungsanordnung zum Abgreifen elektrischer Leistung mehrerer Modulstränge;

Figur 6B einen detaillierteren Schaltplan der zweiten Ausführungsform der Schaltungsanordnung;

Figur 6C in einem Schaltplan Modifikationsmöglichkeiten der Schaltungsanordnung gemäß zweiter Ausführungsform;

Figur 6D in Schaltplänen Modifikationsmöglichkeiten für einzelne Bauelemente der zweiten Ausführungsform;

Figur 6E in einem Schaltplan die zweite Ausführungsform in einem modularen Aufbau;

Figur 7A einen stark abstrahierten Schaltplan einer Schaltungsanordnung zum Abgreifen elektrischer Leistungen von mehreren Modulsträngen gemäß einer dritten Ausführungsform;

Figur 7B in einem Schaltplan die Schaltungsanordnung gemäß dem dritten Ausführungsbeispiel mit detaillierteren Schaltungselementen;

Figur 7C in einem Schaltbild Modifikationsmöglichkeiten von einzelnen elektrischen Bauelementen der Schaltungsanordnung gemäß drittem Ausführungsbeispiel;

Figur 8A in einem stark abstrahierten Schaltbild eine Schaltungsanordnung zum Abgreifen elektrischer Leistungen von mehreren Modulsträngen gemäß einem vierten Ausführungsbeispiel;

Figur 8B ein detaillierteres Schaltbild der Schaltungsanordnung gemäß vierter Ausführungsform;

Figur 8C in einem Schaltbild Modifikationsmöglichkeiten der Schaltungsanordnung gemäß viertem Ausführungsbeispiel;

Figur 8D in einem Schaltbild Modifikationsmöglichkeiten von Schaltelementen der Schaltungsanordnung gemäß viertem Ausführungsbeispiel;

Figur 9A in einem abstrahierten Schaltbild eine Schaltungsanordnung zum Abgreifen elektrischer Leistung gemäß einem fünften Ausführungsbeispiel;

Figur 9B in einem detaillierteren Schaltbild die Schaltungsanordnung gemäß fünftem Ausführungsbeispiel;

Figur 9C in einem Schaltbild Modifikationsmöglichkeiten zur Schaltungsanordnung gemäß Ausführungsform fünf;

Figur 9D in einem Schaltbild Modifikationsmöglichkeiten von einzelnen Bauteilen der Schaltungsanordnung gemäß Ausführungsform fünf;

Figur 10A in einem Schaltbild einen Wechselrichter für einen einzelnen Modulstrang;

Figur 10B in einem abstrahierten Schaltbild eine Schaltungsanordnung zum Abgreifen elektrischer Leistung mehrerer Modulstränge zum Anschluss an einen Wechselrichter gemäß einer sechsten Ausführungsform;

Figur 10C in einem detaillierteren Schaltplan die Schaltungsanordnung gemäß sechstem Ausführungsbeispiel;

Figur 10D in einem Schaltbild Variationsmöglichkeiten der Schaltungsanordnung gemäß sechster Ausführungsform;

Figur 10E in einem Schaltbild Modifikationsmöglichkeiten von einzelnen elektrischen Bauteilen der Schaltungsanordnung gemäß sechstem Ausführungsbeispiel;

Figur 11 einen Schaltplan eines Schalters mit zwei Verbindungspfaden;

Figur 12 einen Schaltplan eines Schalters mit einem Verbindungspfad;

Figur 13 in einem Schaltbild einzelne Baugruppen zur Spannungsbegrenzung;

Figur 14 in einem Schaltbild einen Hochsetzsteller;

Figur 15 in einem Schaltbild einen Tiefsetzsteller;

Figur 16A in einem Schaltbild eine Schaltungsanordnung gemäß zweiter Ausführungsform mit einigen relevanten Spannungen und Strömen für eine Simulation;

Figur 16B in zwei Diagrammen Spannungen und Ströme in der simulierten Schaltungsanordnung gemäß zweiter Ausführungsform;

Figur 16C in sechs Diagrammen jeweils Spannung und Strom an drei Stellern der zweiten Ausführungsform;

Figur 17A in einem abstrahierten Schaltbild eine Schaltungsanordnung zum Abgreifen elektrischer Leistung gemäß einem siebten Ausführungsbeispiel;

Figur 17B in einem detaillierteren Schaltbild die Schaltungsanordnung gemäß siebtem Ausführungsbeispiel;

Figur 17C    in einem Schaltbild Modifikationsmöglichkeiten zur Schaltungsanordnung gemäß Ausführungsform sieben und

Figur 17D    in einem Schaltbild Modifikationsmöglichkeiten von einzelnen Bauteilen der Schaltungsanordnung gemäß Ausführungsform sieben.

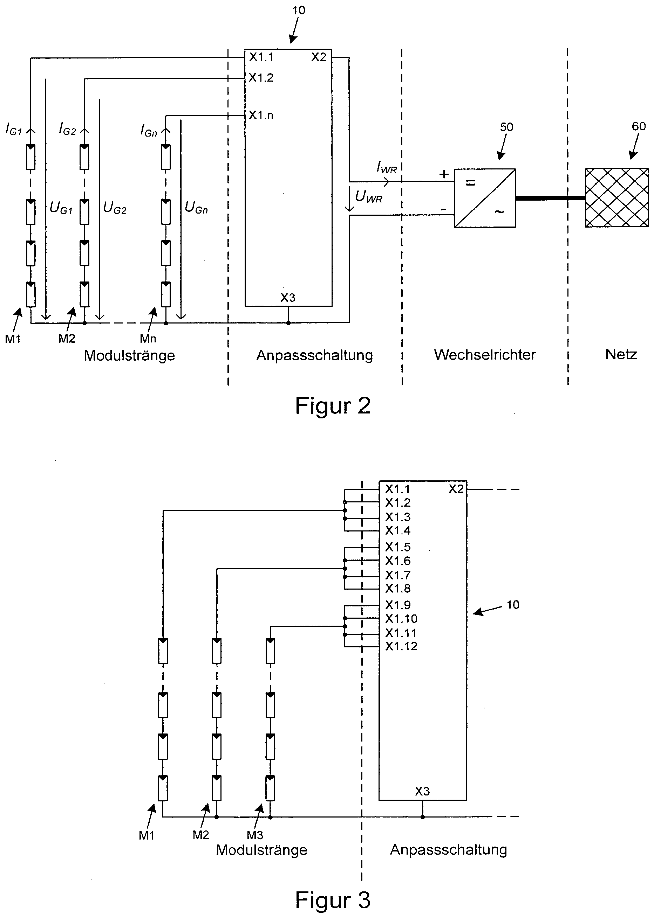

**Figur 2** zeigt in einem Schaltbild schematisch eine Schaltungsanordnung zum Abgreifen von elektrischen Leistungen mehrerer Modulstränge. Modulstränge M1 bis Mn sind mit ihrem Minuspol als erster elektrischer Potentialpunkt an einem gemeinsamen ersten Ausgangspotentialpunkt X3 einer Ausgangsschaltung 10 geschaltet. Die Anpassschaltung 10 verbindet die Modulstränge M1, M2 bis Mn mit einem Wechselrichter 50, der Gleichstrom von den Modulsträngen Mx in einen Wechselstrom umwandelt, den Wechselrichterstrom $I_{WR}$. Der Wechselstrom kann z.B. in das öffentliche Stromnetz 60 oder in ein Inselnetz gespeist werden.

In der in Figur 2 gezeigten Ausführungsform ist jeweils der Minuspol der Modulstränge M1, M2 bis Mn mit dem gemeinsamen ersten Ausgangspotentialpunkt X3 verbunden. Die einzelnen Modulstränge stellen jeweils eine individuelle Modulstrangspannung $U_{G1}$, $U_{G2}$ bis $U_{GN}$ bereit. Die Modulstränge Mx stellen weiterhin die individuellen Modulstrangströme $I_{G1}$, $I_{G2}$ bis $I_{GN}$ bereit. Das Produkt aus der jeweiligen individuellen Modulstrangspannung mit dem individuellen Modulstrangstrom ergibt jeweils eine individuelle Modulstrangleistung $P_{Gx}$, die vom jeweiligen Modulstrang bereitgestellt wird. Jeder der Modulstränge im M1, M2 bis Mn liegt mit einem zweiten elektrischen Potentialpunkt an einem eigens dafür vorgesehenen elektrischen Eingang X1.1, X1.2 bis X1.n der Anpassschaltung 10. Diese Eingänge der Anpassschaltung 10 sind separat voneinander ausgebildet und elektrisch voneinander getrennt.

Die Anpassschaltung 10 steuert und/oder regelt die an ihrem Eingang anliegenden Potentiale der zweiten elektrischen Potentialpunkte der Modulstränge M1 bis Mn derart, dass am Ausgang der Anpassschaltung 10 ein angepasster zweiter Ausgangspotentialpunkt X2 bereitgestellt wird, der von der Anpassschaltung 10 auf einen bestimmten Wert angepasst wird. Die Anpassschaltung 10 weist einen Ausgang auf, an dem die Anpassschaltung einen Ausgangsstrom $I_{WR}$ und eine Ausgangsspannung $U_{WR}$ bereitstellt, z.B. für einen ausgangsseitig nachgeschalteten Wechselrichter 50. Die Ausgangsspannung $U_{WR}$ wird zwischen dem gemeinsamen ersten Ausgangspotentialpunkt und dem angepassten zweiten Ausgangspotentialpunkt bereitgestellt.

Der Ausgangsstrom $I_{WR}$ setzt sich aus der Summe der individuellen Modulstrangströme zusammen und ist gegeben durch Gleichung 1:

Gleichung 1:

$$I_{WR} = \sum_{x=1}^{n} I_{Gx}$$

Die Ausgangsspannung $U_{WR}$ ergibt sich aus der Leistungsbilanz. Die individuelle Modulstrangleistung $P_{Gx}$ ergibt sich als Produkt der individuellen Modulstrangspannung mit dem individuellen Modulstrangstrom aus Gleichung 2:

Gleichung 2:

$$P_{Gx} = U_{Gx} \cdot I_{Gx}$$

Damit ergibt sich die Ausgangsspannung $U_{WR}$ aus der Gleichung 3 zu

Gleichung 3:

$$U_{WR} = \frac{\sum_{x=1}^{n} P_{Gx}}{I_{WR}}$$

Die Gleichungen 1 bis 3 sind dabei Idealgleichungen und berücksichtigen keine Verluste an den einzelnen Schaltungselementen der Schaltungsanordnung. Insbesondere die Gleichungen 1 und 3 werden selbst im Idealfall nur im Wesentlichen erfüllt. Die Anpassschaltung stellt zwischen dem gemeinsamen ersten Ausgangspotentialpunkt X2 und dem angepassten zweiten Ausgangspotentialpunkt X3 einen ausgangsseitigen Gleichspannungszwischenkreis bereit, der an den Wechselrichter 50 angeschlossen ist.

Alternativ kann auch der Pluspol der Modulstränge M1 bis Mn an den gemeinsamen ersten Ausgangspotentialpunkt X3 angelegt werden und die Minuspole an die separaten Eingänge X1.n der Anpassschaltung 10. Die Polaritäten von Leistungshalbleiterkomponenten etc. der Anpassschaltung sind dann entsprechend umkehrt.

Bei der in Figur 2 gezeigten Schaltungsanordnung wird die Ausgangsspannung $U_{WR}$ im Gegensatz zu konventionellen DC-DC-Stellern von der Anpassschaltung 10 nicht konstant gehalten, sondern liegt im Wesentlichen zwischen der niedrigsten und höchsten an der Anpassschaltung anliegenden individuellen Modulstrangspannung. Die individuellen Modulstrangspannungen können über die Zeit langsam variieren, zum Beispiel in Abhängigkeit von einer Schattenbildung an einzelnen Solarmodulen der einzelnen Modulstränge. Gebräuchliche Wechselrichterschaltungen sind üblicherweise problemlos in der Lage, mit einer leicht veränderlichen Eingangsspannung zu arbeiten, da sie normalerweise auch für einen Direktanschluss eines einzelnen Modulstrangs geeignet sind.

Die Eingänge X1.x der Anpassschaltung liegen normalerweise auf einem jeweils unterschiedlichen elektrischen Potential, das von den individuellen Modulstrangspannungen $U_{Gx}$ abhängig ist.

**Figur 3** zeigt in einem Schaltbild eine Anpassschaltung 10 mit zwölf verschiedenen Eingängen als Ausführungsbeispiel. An der Anpassschaltung 10 mit den zwölf Eingängen liegen nur drei Modulstränge M1, M2 und M3 an. Jeder der Modulstränge liegt dabei an jeweils vier Eingängen der Anpassschaltung 10 an. So liegt der erste Modulstrang M1 an den Eingängen X1.1. bis X1.4 der Anpassschaltung an usw. Das Konzept der Anpassschaltung ist flexibel was die Anzahl der anschließbaren Modulstränge betrifft, da beliebig viele Eingänge X1.x parallel geschaltet sein können.. An die Anpassschaltung mit zwölf Eingängen können zum Beispiel zwölf Modulstränge mit Nennstrom, sechs Modulstränge an jeweils zwei parallelen Eingängen mit zweifachen Nennstrom, vier Modulstränge an jeweils drei parallele Eingänge mit maximal dreifachen Nennstrom usw. angeschlossen werden. Ebenso müssen nicht zwangsweise alle Eingänge X1.1 bis X1.12 der Anpassschaltung an einen Modulstrang angeschlossen sein, sondern einzelne Eingänge können auch ohne elektrischen Anschluss betrieben werden.

Das Schaltungskonzept der erfindungsgemäßen Anpassschaltung kann modular sein, das heißt die Anzahl der Eingänge kann durch eine geringe Anzahl verschiedener leistungselektronischer Bausteine beliebig erweitert werden. Damit kann die Anpassschaltung für eine beliebige vorbestimmte Anzahl von Modulsträngen vorgesehen und ausgebildet sein. Die Modulstränge können zum Beispiel Solarzellen, Batterien und/oder Brennstoffzellen aufweisen.

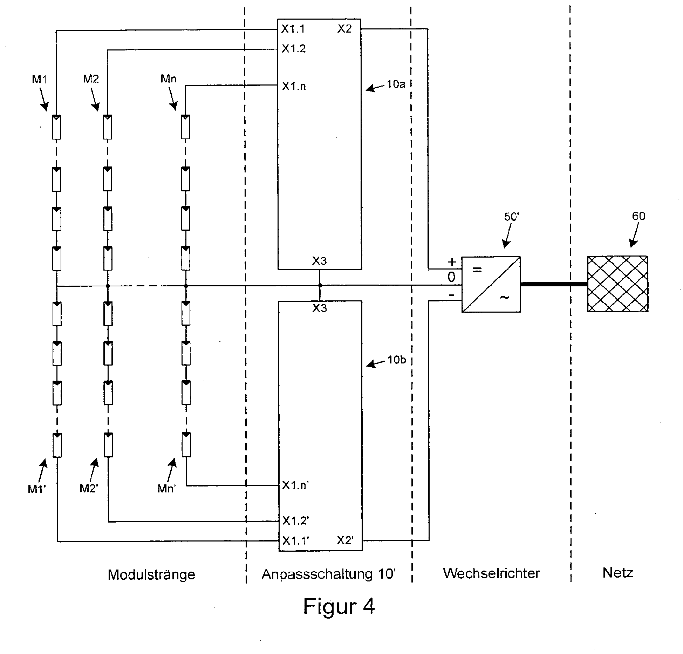

**Figur 4** zeigt in einem Schaltbild eine Schaltungsanordnung zum Abgreifen von elektrischer Ladung mehrerer Modulstränge mit einer zweiteilig ausgebildeten Anpassschaltung 10'. Diese ist für einen Wechselrichter 50' mit einem Mittenanschluss geeignet. Die zweiteilige Anpassschaltung 10' weist dabei einen ersten Anpassschaltungsteil 10a auf, der analog zu der in Figur 2 gezeigten Anpassschaltung aufgebaut ist. Weiterhin weist die Anpassschaltung 10' in negativer Konfiguration eine zweite Anpassschaltung als zweiten Anpassschaltungsteil 10b auf, bei dem alle Bauteile andersherum gepolt sind. Die zweiteilige Anpassschaltung 10' liefert, regelt und/oder steuert die Ausgangsspannung $U_{WR}$ derart, dass diese zwischen dem angepassten zweiten Ausgangspotential X2 und einem angepassten dritten Ausgangspotentialpunkt X2' anliegt bzw. bereitgestellt wird.

Die Anzahl der an den ersten Anpassschaltungsteil 10a angeschlossenen Modulstränge kann sich von der Anzahl der an den zweiten Anpassschaltungsteil 10b angeschlossenen Modulstränge unterscheiden.

Das Konzept der in den Figuren 2 bis 4 dargestellten Anpassschaltung nutzt die Tatsache aus, dass die individuellen Modulstrangspannungen in ihrem Punkt maximaler Leistungsabgabe in den meisten Fällen relativ nahe beieinander liegen. Ein konventioneller Hochsetzsteller, wie diese als DC-DC-Wandler W1, W2 und W3 in Figur 1C dargestellt sind, sind üblicherweise für einen Eingangsspannungsbereich von 0% bis 100% der Spannung $U_{WR}$ am Wechselrichter ausgebildet. Ein Teil der Komponenten in der Anpassschaltung 10 ist für geringere zu schaltende Spannungen ausgebildet, die etwa im Bereich der Differenz der höchsten und niedrigsten individuellen Modulstrangspannung liegen.

Beispielsweise stellt ein Modulstrang, der aus einer Reihenschaltung von 20 Modulen besteht, bei einer Verschattung von 5 Modulen immer noch 75% der Modulstrangspannung im unverschatteten Fall bereit. Selbst im Fall dieser Teilverschattung ist derselbe Modulstrang noch in der Lage, ca. 75% seiner Leistung zu liefern. Im Falle einer direkten Parallelschaltung mehrerer Modulstränge, wie in Figur 1A gezeigt, kann diese Verschattung jedoch dazu führen, dass der betroffene Strang so gut wie keine Leistung mehr an den Wechselrichter 50 abgibt. Treten Temperaturunterschiede auf, so ändern sich die individuellen Modulstrangspannungen bei maximaler Leistungsabgabe ebenfalls nur in einem relativ geringen Maß. So zeigt die Durchlassspannung eines PN-Übergangs einen Temperaturkoeffizienten von ca. $-2 \times 10^{-3}$/K bis $-5 \times 10^{-3}$/K.

Innerhalb einer Anlage können Solarmodulstränge unterschiedlich ausgerichtet sein, zum Beispiel bei unterschiedlichen Dachneigungen, je nach Himmelsrichtungslage, etc. Dies kann zu unterschiedlichen individuellen Modulstrangspannungen und unterschiedlichen individuellen Modulstrangströmen führen. Da die innere Spannung eines Solarmoduls in erster Näherung einen logarithmischen Zusammenhang zur Einstrahlungsstärke zeigt, sind die Spannungsunterschiede relativ gering.

In einer Modulanlage kann es nötig sein, dass in verschiedenen Strängen unterschiedlich viele Solarmodule in Reihe geschaltet werden müssen, um die zur Verfügung stehende Fläche komplett auszunutzen. Bietet eine Dachfläche zum Beispiel Platz für 35 Module, können diese in einem Modulstrang zu 18 Modulen und einem Modulstrang zu 17 Modulen aufgeteilt werden. Hier bleiben die Spannungsunterschiede relativ gering, für direkte Parallelschaltung sind sie jedoch schon zu groß. Weiterhin können die Module der verschiedenen Stränge aus verschiedenen Solarmodultypen bestehen oder aus verschiedenen Modultechnologien aufgebaut sein. Auch dies kann zu Spannungsunterschieden führen.

Die Schaltungsanordnung verwendet zur individuellen Anpassung der Modulstrangspannungen Steller, deren Leistungshalbleiter nur einen Bruchteil der Wechselrichterspannung $U_{WR}$ und einen Bruchteil der Modulstrangspannungen $U_{Gx}$ schalten müssen. Die zu schaltenden Spannungen liegen in der Größenordnung der Differenz zwischen höchster und niedrigster Modulstrangspannung im jeweiligen Punkt maximaler Leistung.

Die Schaltungsanordnung weist mehrere Vorteile auf: Da die Schaltverluste von Stellern maßgeblich von den zu schaltenden Spannungen abhängen, sinken die Schaltverluste gegenüber konventionellen DC-DC-Wandlern, vgl. Figur 1C. Als Leistungshalbleiter können Bauteile eingesetzt werden, deren Sperrspannungen nur ein Bruchteil von $U_{WR}$ und $U_{Gx}$ betragen. Leistungshalbleiter mit kleinerer Sperrspannung und gleichem zulässigen Strom sind kostengünstiger als solche mit höherer Sperrspannung. Leistungshalbleiter mit niedrigerer Sperrspannung verursachen typischerweise weniger Durchlassverluste als solche mit höherer Sperrspannung. Dadurch werden Leistungsverluste reduziert. Leistungshalbleiter mit niedrigerer Sperrspannung können typischerweise mit einer höheren Schaltfrequenz betrieben werden als solche mit höherer Sperrspannung. Die in leistungselektronischen Stellern normalerweise notwendigen und verwendeten Drosseln fallen aufgrund der kleineren anliegenden Spannungen und gegebenenfalls höheren Schaltfrequenzen kleiner und kostengünstiger aus. Niedrigere Verluste in den Leistungshalbleitern führen zu geringeren Kosten, die für die Leistungshalbleiter und ihre Kühlung aufgewendet werden müssen. Weiterhin sinkt gegenüber konventionellen DC-DC-Wandlern bzw. -Stellern das Bauvolumen. Der Wirkungsgrad steigt.

Die Schaltungsanordnung lässt sich in mehreren verschiedenen Ausführungsformen realisieren, die auf demselben Grundprinzip von Stellern mit reduzierter geschalteter Spannung basieren. In allen Ausführungsformen können die Leistungshalbleiter mit einer Pulsbreitenmodulation getaktet sein. Als vorteilhaft werden insbesondere die Ausführungsformen 1 bis 3 angesehen.

Da die Halbleiter mit hohen Schaltfrequenzen betrieben werden, können in der Schaltungsanordnung verlustarme und langlebige Folienkondensatoren als Kondensatoren verschalten sein. Der Einsatz von Elektrolytkondensatoren, die ein Alterungsverhalten zeigen, das durch hohe Temperaturen beschleunigt wird, lässt sich vermeiden.

Erste Ausführungsform

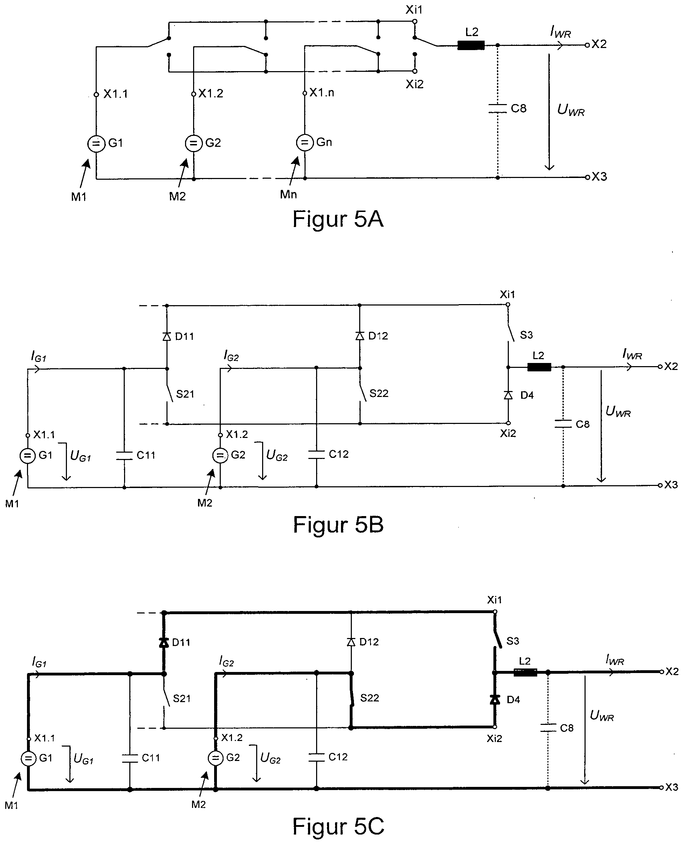

**Figur 5A** zeigt in einem abstrahierten Schaltbild eine Schaltungsanordnung zum Abgreifen elektrischer Leistung von Modulsträngen gemäß einer ersten Ausführungsform. Die Schaltungsanordnung gemäß erster Ausführungsform ist zum Abgreifen elektrischer Leistung von mehreren Modulsträngen ausgebildet und vorgesehen, wie in Figur 5A gezeigt. Allerdings ergibt sich in der ersten Ausführungsform die Einschränkung, dass maximal zwei verschiedene individuelle Modulstrangspannungen auftreten können. Deswegen eignet sich die Schaltungsanordnung gemäß erster Ausführungsform insbesondere zum Abgreifen elektrischer Leistung von genau zwei Modulsträngen M1 und M2. Die Modulstränge M1, M2, ..., Mn stellen jeweils eine Gleichspannungsquelle und/oder Gleichstromquelle G1, G2, ..., Gn bereit. Alle Modulstränge M1, M2, ..., Mn liegen an einem gemeinsamen ersten Ausgangspotentialpunkt X3. An Eingängen X1.1, X1.2, ..., X1.n einer Anpassschaltung liegt jeder der Modulstränge M1, M2, Mn mit einem zweiten elektrischen Potential an.

Die Anpassschaltung weist für jeden Modulstrang M1, M2, ..., Mn einen in Fig. 5A abstrahiert gezeigten Modulstrangschalter S21*, S22*, ..., S2n* auf. Die Modulstränge M1, M2, ..., Mn (kurz bezeichnet als Mx) können über die abstrahiert gezeigten Modulstrangschalter S21*, S22*, ..., S2n* (kurz bezeichnet als S2x*) an zwei unterschiedliche interne Potentialpunkte der Anpassschaltung angelegt werden, an die internen Potentialpunkten Xi1 und Xi2.

Zwischen den internen Potentialpunkten Xi1 und Xi2 ist ein getakteter Ausgangsschalter S3* der Anpassschaltung geschaltet, der in Fig. 5A als abstrahiert dargestellter Ausgangsschalter gezeigt ist. Der abstrahiert gezeigte Ausgangsschalter S3* schaltet zwischen den beiden internen Potentialpunkten Xi1 und Xi2 und kann wechselweise mit einem der beiden internen Potentialpunkte Xi1 oder Xi2 verbunden werden. Der abstrahiert gezeigte Ausgangsschalter S3* verbindet die internen Potentialpunkte Xi1 oder Xi2 elektrisch mit einer Ausgangsdrossel L2, die allgemein als Glättungselement bzw. Speicherdrossel oder Spule ausgebildet sein kann. Die Ausgangsdrossel L2 stellt in Verbindung mit einem Ausgangskondensator C8 die Ausgangsspannung $U_{WR}$ der Anpassschaltung auf den angepassten zweiten Ausgangspotentialpunkt X2. Der Kondensator C8 kann in einer Ausführungsform als Bauteil des Wechselrichters ausgebildet sein, und in einer Ausführungsform als Bauteil der Anpassschaltung ausgebildet sein. C8 ist deshalb als durchbrochene Linie dargestellt.

Der Ausgangskondensator C8 ist so zwischen die beiden Ausgangspotentiale X3 und X2 geschalten, dass am Ausgangskondensator C8 die Ausgangsspannung $U_{WR}$ abgegriffen werden kann.

**Figur 5B** zeigt in einem Schaltbild eine Schaltungsanordnung gemäß der ersten Ausführungsform in einem höheren Detailgrad als das abstrahierte Schaltbild der Figur 5A. Insbesondere sind in Fig. 5B die in Fig. 5A noch abstrahiert gezeigten Schalter in einem höheren Detailgrad gezeigt. Die in Fig. 5A mit dem Zusatzzeichen * gekennzeichneten abstrahiert gezeigten Schalter mit zwei Verbindungspfaden weisen mindestens einen Schalter und eine Diode auf. In Figur 5B sind diese Schalter als Einzelschalter mit zusätzlichen Bauteilen wie z.B. Dioden gezeigt.

Allgemein sind die abstrahiert gezeigten Schalter als Schalter mit zwei Verbindungspfaden ausgebildet (und in den Figuren mit einem * gekennzeichnet), während die übrigen beschriebenen Schalter als Einzelschalter ausgebildet sind.

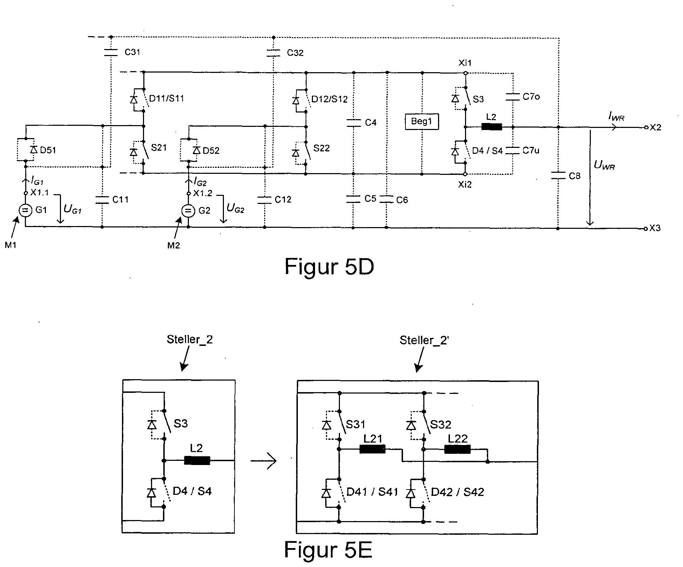

In der in Figur 5B Schaltungsanordnung sind die Minuspole zweier Modulstränge M1 und M2 miteinander verbunden und mit dem gemeinsamen ersten Ausgangspotentialpunkt X3, der einen Pol eines ausgangsseitigen Gleichspannungszwischenkreises der Anpassschaltung bereitstellt. Der Pluspol des ausgangsseitigen Gleichspannungszwischenkreises ist der angepasste zweite Ausgangspotentialpunkt X2 und ist mit einem Anschluss einer oder mehrerer Ausgangsdrosseln L2 verbunden. Der jeweils andere Anschluss der Ausgangsdrossel L2 bzw. der Ausgangsdrosseln L21 und L22 (vgl. Fig. 5E) kann entweder mit dem Pluspol des ersten Modulstrangs über den Eingang X1.1 oder mit dem Pluspol des zweiten Modulstrangs über den Eingang X1.2 verbunden werden. Die aktuelle Verbindung der Ausgangsdrossel(n) wird von der Stellung und somit der Steuerung und/oder Regelung eines Ausgangsschalters S3 bestimmt. Die Wahl der jeweils ausgewählten Verbindungspfade für den Stromfluss über die Modulstrangschalter S21, S22 und den Ausgangsschalter S3 erfolgt über getaktete Leistungshalbleiter, die teilweise mit einer Pulsbreitmodulation angesteuert werden. Alternativ oder zusätzlich könnten weitere Ausgangsdrosseln vorhanden sein.

Alternativ kann die Schaltung auch andersherum gepolt aufgebaut werden.

Jedem Modulstrang Mx ist eine Modulstrangdiode D1x zugeordnet, die dafür sorgt, dass die höchste der individuellen Modulstrangspannungen $U_{Gx}$ am internen Potential Xi1 anliegt.

Parallel zu den Modulsträngen sind Modulstrangzwischenspeicherkondensatoren C1 x geschaltet, die die individuellen Modulstrangleistungen $P_{Gx}$ zu den Zeiten, in denen die Bauteile D1x und S2x keinen Strom führen, zwischenspeichern.

**Figur 5C** zeigt in einem Schaltbild den Stromfluss durch die in Figur 5B gezeigte Schaltungsanordnung. Sofern die individuelle Modulstrangspannung $U_{G1}$ des Modulstrangs M1 im jeweiligen Punkt maximaler Leistung größer als die individuelle Modulstrangspannung $U_{G2}$ ist, wird der Modulstrangschalter S22 geschlossen und der Modulstrangschalter S21 geöffnet. Die Schalter können zum Beispiel als Transistoren ausgebildet sein. In diesem Fall leitet eine Modulstrangdiode D11, während eine Modulstrangdiode D12 sperrt. Der Ausgangsschalter S3 wird mit einer Pulsbreitenmodulation getaktet. Der Stromfluss ist für diesen Fall in Figur 5C mit dick ausgeführten Linien gekennzeichnet.

Ist die individuelle Modulstrangspannung $U_{G1}$ am jeweiligen Punkt maximaler Leistungsabgabe kleiner als die individuelle Modulstrangspannung $U_{G2}$, so wird der Modulstrangschalter S21 geschlossen und der Modulstrangschalter S22 geöffnet. Die Modulstrangschalter S2x werden somit in Abhängigkeit davon geschaltet, welcher Modulstrang aktuell die maximale bzw. die minimale Modulstrangspannung bereitstellt.

Da die Modulstrang-Bauelemente S21, S22, D11 und D12 nur selten geschaltet werden, nämlich wenn sich die individuelle Modulstrangspannung im Punkt maximaler Leistung so geändert hat, dass ein anderer Modulstrang die maximale bzw. minimale Modulstrangspannung bereitstellt, können in dieser Ausführungsform für die Bauelemente preiswerte Bauelemente verwendet werden, die nicht auf niedrige Schaltverluste optimiert sind.

**Figur 5D** zeigt in einem Schaltbild mögliche Modifikationsmöglichkeiten für die Schaltungsanordnung gemäß erster Ausführungsform. In Reihe zu den Gleichspannungsquellen G1 und G2 der Modulstränge M1 und M2 können Schutzdioden D51 und D52 verschaltet sein. Diese verhindern, dass bei einem externen Kurzschluss von Gleichspannungsquelle G1 bzw. Gleichspannungsquelle G2 negative Ströme $I_{G1}$ bzw. $I_{G2}$ fließen. Außerdem schützen die Dioden in diesem Fehlerfall die Leistungshalbleiter vor zu hohen Spannungen.

Als Modulstrangschalter S21, S22 und als Ausgangsschalter S3 können Transistoren verwendet werden, die bereits eine Paralleldiode aufweisen. Eine Paralleldiode ist zum Beispiel bei allen MOSFETs, sowie bei vielen käuflich erwerbbaren IGBTs enthalten.

Parallel zu den Modulstrangdioden D11, D12 und Ausgangsdiode D4 können Modulstrangschalter S11, S12 und Zusatzausgangsschalter S4 verschaltet sein. Diese werden immer dann angesteuert, wenn die korrespondierenden Schalter S21, S22 bzw. S3 nicht leiten. Wenn MOSFETs als Schalter verwendet werden, verringert sich dann die Spannung über den Dioden auf einen Wert von deutlich unter ihrer Vorwärtsspannung, was die Durchlassverluste weiter verringert.

Im einfachsten Fall werden nur die beiden Modulstrangzwischenspeicherkondensatoren C11, C12 und der Ausgangskondensator C8 verwendet. Die genannten Kondensatoren können teilweise weggelassen werden, wenn dafür Kondensatoren an anderer Stelle angeordnet werden, in der Schaltungsanordnung gemäß Figur 5D sind z.B. die Kondensatoren C31, C32, C4, C5, C6, C7o und C7u eingezeichnet. Sofern einer der Kondensatoren C4, C5, C6, C7o oder C7u bestückt wird, sollten die Schalter S11, S12, S21 und S22 langsam eingeschaltet werden, damit die Ströme während des Umladens der genannten Kondensatoren auf einen zulässigen Wert begrenzt werden. Da die Schalter S11, S12, S21 und S22 in der ersten Ausführungsform relativ selten geschaltet werden, führt dies zu vernachlässigbaren zusätzlichen Verlusten.

Die Modulstrangzwischenspeicherkondensatoren C11 und C12 können mit ihrem Pluspol entweder an die Anode oder an die Kathode der Schutzdioden D51 bzw. D52 angeschlossen werden. Die Kondensatoren C31, C32 können mit einem Pol entweder an die Anode oder die Kathode der Schutzdioden D51, D52 angeschlossen werden.

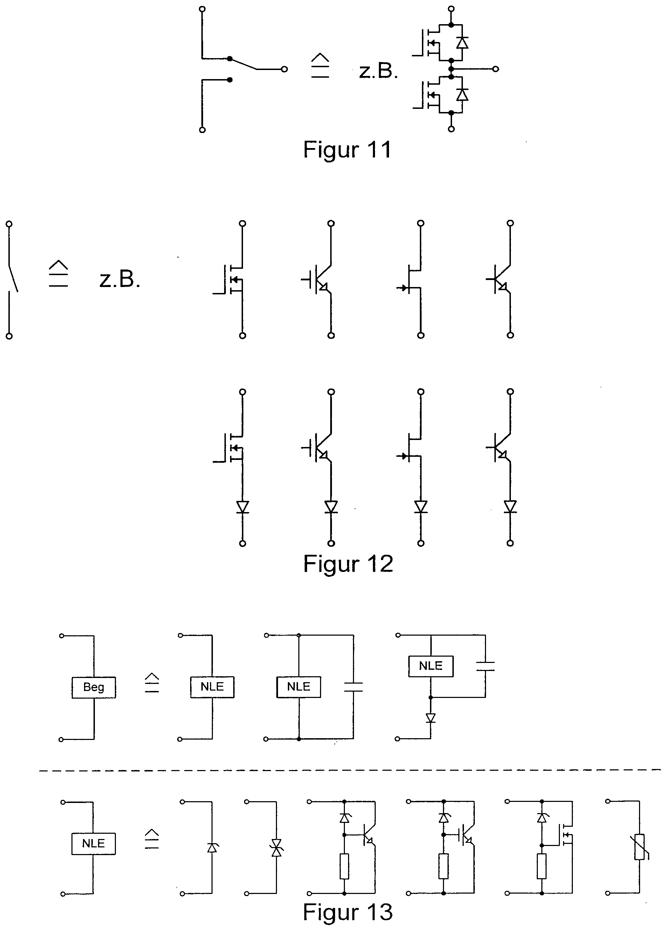

Eine Begrenzungsschaltung Beg1 kann zur Spannungsbegrenzung über den Leistungshalbleitern im Fehlerfall und bei abgeschalteter Steuerung eingefügt werden (vgl. auch Figur 13).

Der Ausgangssteller Steller_2, der als Bauteile den Ausgangsschalter S3, die Ausgangsdiode D4 bzw. den Zusatzausgangsschalter S4 und die Ausgangsdrossel L2 aufweisen kann, kann um weitere Parallelzweige erweitert werden, die idealerweise phasenversetzt getaktet werden, was in **Figur 5E** gezeigt ist. Der Ausgangssteller Steller_2 kann sowohl zwei phasenversetzt getaktete Steller aufweisen, wie auch mehr als zwei phasenversetzt getaktete Steller. Also z.B. mit S3y, wobei y die Nummer der Phase bezeichnet

Zweite Ausführungsform

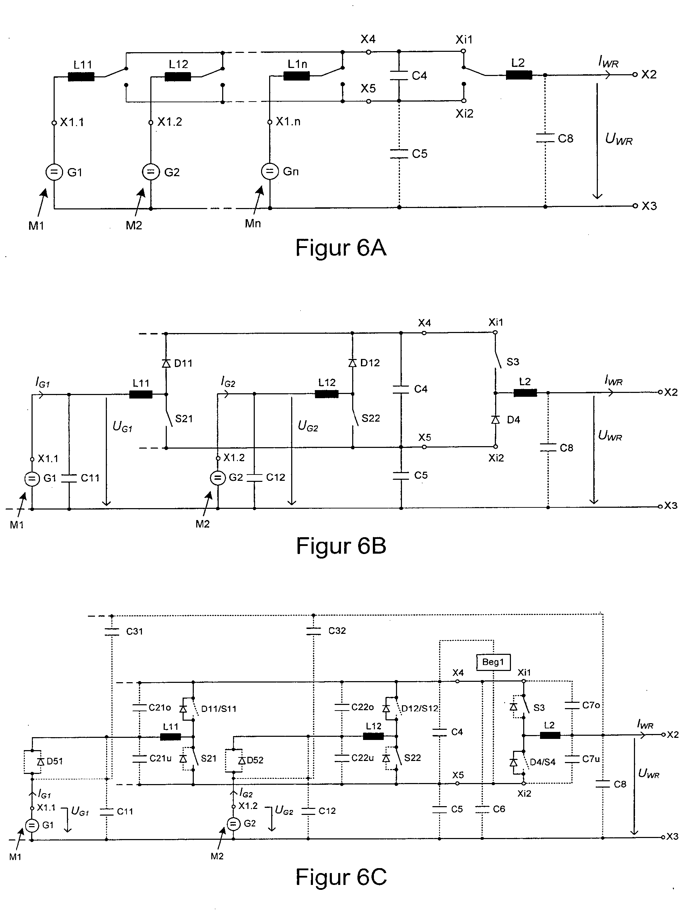

**Figur 6A** zeigt in einem abstrahierten Schaltbild eine Schaltungsanordnung zum Abgreifen von elektrischer Leistung mehrerer Modulstränge gemäß einer zweiten Ausführungsform. Die Schaltung ist zum Abgreifen elektrischer Leistung mehrerer Modulstränge geeignet, die als Gleichspannungsquellen G1, G2... Gn dargestellt sind. Diese liegen mit ihrem Minuspol am gemeinsamen ersten Ausgangspotentialpunkt X3. Der Pluspol der Gleichspannungsquellen Gx liegt jeweils an einem Eingang X1.1, X1.2... X1.n der Anpassschaltung. Für jeden Modulstrang Mx ist eine eigene Modulstrangdrossel L11, L12 bis L1n sowie ein abstrahiert gezeigter Modulstrangschalter S21*, S22* bis S2n* vorgesehen, der die einzelnen Modulstränge an eines der beiden internen Potentialpunkte Xi1 bzw. Xi2 anschließt. Zwischen den beiden internen Potentialpunkten ist ein Ausgangskondensator C4 geschalten. Die Anpassschaltung regelt/steuert den gemeinsamen zweiten Ausgangspotentialpunkt X2 mittels eines ausgangsseitigen Gleichspannungszwischenkreis und eines Stellers, der eine Ausgangsdrossel L2 und einen abstrahiert gezeigten Ausgangsschalter S3* aufweist.

**Figur 6B** zeigt die Schaltungsanordnung gemäß zweiter Ausführungsform in höherem Detailgrad, ähnlich wie in der Beschreibung des ersten Ausführungsbeispiels. Dabei ist die in Figur 6B gezeigte Schaltung für genau zwei Modulstränge M1 und M2 gezeigt. Dies dient lediglich der Vereinfachung. Die Schaltungsanordnung kann entsprechend dem in Figur 6B gezeigten Schaltbild ergänzt werden und somit für mehrere Modulstränge ausgelegt sein.

Die Minuspole einer oder mehrerer Gleichspannungsquellen Gx sind mit dem Minuspol eines ersten (ausgangsseitigen) Gleichspannungszwischenkreises verbunden, dem gemeinsam ersten Ausgangspotentialpunkt X3. Die Schaltungsanordnung weist weiterhin einen zweiten, geteilten (internen) Gleichspannungszwischenkreis auf, der eine Reihenschaltung von zwei Kondensatoren C4 und C5 aufweist. Der interne Gleichspannungszwischenkreis weist drei unterschiedliche Potentiale und Anschlüsse auf, nämlich einen positiven, einen mittleren sowie einen negativen Anschluss. Dabei ist der positive Anschluss der Potentialpunkt X4, der auf einem ersten internen Potentialpunkt Xi1 liegt. Der mittlere Potentialpunkt X5 liegt auf einem zweiten internen Potentialpunkt Xi2. Zwischen diesen beiden Potentialpunkten ist der Zwischenkondensator C4 verschaltet. Zwischen dem mittleren Potentialpunkt X5 und dem negativen Anschluss, der auf dem gemeinsamen ersten Ausgangspotentialpunkt X3 liegt, ist ein Außenkondensator C5 geschaltet. Der negative Anschluss dieses zweiten internen Zwischenkreises ist somit mit dem negativen Anschluss des ersten ausgangsseitigen Zwischenkreises verbunden. Jeder positive Pol jedes Modulstrangs Mx ist über die Eingänge X1.x der Anpassschaltung mit einem Anschluss einer oder mehrerer Modulstrangdrosseln L1x verbunden. Der jeweils andere Anschluss der Modulstrangdrossel bzw. -drosseln kann entweder mit positivem Potentialpunkt X4 oder mit dem mittleren Potentialpunkt X5 des zweiten Zwischenkreises verbunden sein.

Der positive Pol des ersten Zwischenkreises, nämlich der angepasste Ausgangspotentialpunkt X2, ist mit einem Anschluss einer oder mehrerer Ausgangsdrosseln L2 bzw. L2x als Glättungselement verbunden. Der jeweils andere Anschluss der Ausgangsdrossel L2 kann entweder mit dem positiven oder mit dem mittleren Potentialpunkt X4 bzw. X5 des internen Zwischenkreises verbunden werden.

Der Außenkondensator C5 verbindet das mittlere interne Potential Xi2 mit dem gemeinsamen ersten Ausgangspotentialpunkt X3.

Die Schaltung kann alternativ auch umgekehrt gepolt werden. Die Wahl der Verbindungspfade erfolgt über Leistungshalbleiter, die mittels Pulsbreitenmodulation angesteuert werden.

Die Schaltungsanordnung gemäß zweiter Ausführungsform erlaubt den Anschluss von beliebig vielen Modulsträngen an einen Wechselrichter. In dieser Schaltungsvariante werden alle Schalter bzw. Transistoren S2x und S3 mit einer Pulsbreitenmodulation getaktet. Die Spannung über dem Zwischenkondensator C4 entspricht mindestens der Differenz zwischen höchster und niedrigster Modulstrangspannung.

**Fig. 6C** zeigt in einem Schaltbild mögliche Modifikationsmöglichkeiten für die Schaltungsanordnung gemäß zweiter Ausführungsform. Die Modifikationsmöglichkeiten gegenüber der in Figur 6B gezeigten Schaltungsanordnung sind in Figur 6C durch gestrichelte Verbindungen gekennzeichnet.

In Reihe zu den Gleichspannungsquellen Gx der Modulstränge Mx können Schutzdioden D5x eingebaut werden. Diese verhindern, dass bei einem externen Kurzschluss von den Gleichspannungsquellen Gx negative Ströme $I_{Gx}$

fließen. Außerdem schützen sie in diesem Fehlerfall die Leistungshalbleiter vor zu hohen Spannungen.

Als Modulstrangschalter S2x und Ausgangsschalter S3 können zum Beispiel Transistoren verwendet werden, die bereits eine Paralleldiode aufweisen. Dies ist bei allen MOSFETs, sowie bei vielen käuflichen IGBTs der Fall.

Parallel zu den Dioden D1x und D4 können weitere Schalter S1x und S4 verschaltet sein. Diese werden von der Anpassschaltung immer dann angesteuert, wenn die korrespondierenden Modulstrangschalter S2x bzw. der Ausgangsschalter S3 nicht leiten. Wenn MOSFETs verwendet werden, verringert sich dabei die Spannung über den Dioden auf einen Wert von deutlich unter ihrer Vorwärtsspannung, was die Durchlassverluste weiter verringert.

Für den Fall, dass die Schaltungsanordnung möglichst wenige Komponenten aufweisen soll, werden nur die Kondensatoren C1x sowie C4, C5 und C8 verwendet. Die genannten Kondensatoren können teilweise entfallen, wenn dafür Kondensatoren an anderer Stelle verschaltet sind, in Figur 6C zum Beispiel die Kondensatoren C2xo, C2xu, C3x, C6, C7o, C7u. Hier ergeben sich für den Fachmann viele Möglichkeiten, die zur gewünschten Schaltungsfunktion führen.

Die Modulstrangzwischenspeicherkondensatoren C1x können mit ihrem Pluspol entweder an die Anode oder an die Kathode der Schutzdiode D5x angeschlossen werden, sofern die Schutzdioden D5x in der Schaltungsanordnung verschaltet sind.

Eine Vorrichtung zur Begrenzung der Spannung über den Leistungshalbleiter im Fehlerfall und bei abgeschalteter Steuerung kann als Schaltungselement Beg1 verschaltet sein. Ausführungsformen einer solchen Begrenzungsschaltung sind in Figur 13 gezeigt.

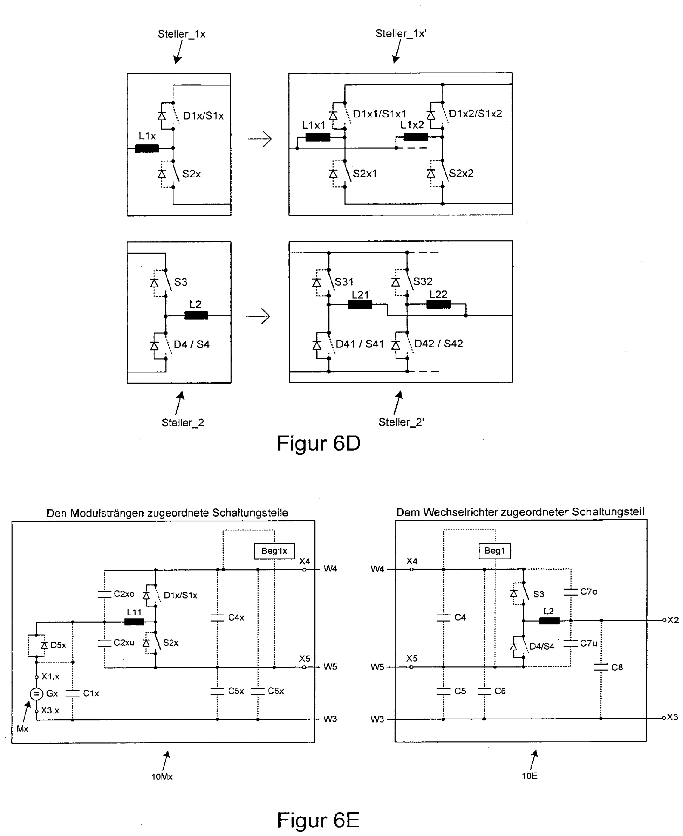

Der die Ausgangsschalter S3, die Diode D4 bzw. den Schalter S4 und die Ausgangsdrossel L2 aufweisende Ausgangssteller Steller_2 kann um weitere Parallelzweige erweitert werden, die idealerweise phasenversetzt getaktet werden. Gleiches gilt für die Modulstrangsteller Steller_1x, die jeweils eine Modulstrangdiode D1x bzw. Modulstrangdiodenschalter S1x, einen Modulstrangschalter S2x und eine Modulstrangdrossel L1x aufweisen. Diese Modifikationsmöglichkeiten sind in **Figur 6D** gezeigt: Ein phasenversetzt getakteter Ausgangssteller Steller_2' bzw. phasenversetzt getaktete Modulstrangsteller Steller_1x' können die Steller ersetzen, mit den entsprechenden, in Figur 6D gezeigten Ersatzbauteilen.

Die Schaltungsanordnung gemäß zweiter Ausführungsform erlaubt einen modularen und verteilten Aufbau, bei dem nicht jeder Modulstrang mit einer separaten Leitung an die Anpassschaltung angeschlossen werden muss. Dies erlaubt unter anderem, die Anzahl der anschließbaren Modulstränge durch eine modulare Erweiterung der Schaltungsanordnung zu erhöhen oder zu verringern, in Abhängigkeit vom aktuellen Bedarf oder vom Kundenwunsch.

**Figur 6E** zeigt diesbezüglich, dass die Schaltungsanordnung gemäß zweiter Ausführungsform, die in Figur 6C gezeigt ist, in mehrere modulare Baugruppen aufgeteilt sein kann. Dazu weist die Schaltungsanordnung zumindest ein Ausgangsschaltungsteilmodul 10E auf, das dem Wechselrichter zugeordnet ist. Die Schaltungsanordnung weist weiterhin ein oder mehrere den Modulsträngen zugeordnete Schaltungsteile auf, die Strangschaltungsteilmodule 10Mx. Die einzelnen Module 10E und 10Mx können räumlich voneinander getrennt sein und werden über zumindest drei gemeinsame Leitungen W3, W4 und W5 miteinander verbunden. Die drei Leitungen liegen einmal auf dem gemeinsamen ersten Ausgangspotential X3, dem mittleren internen Potential X5=Xi2 und dem oberen internen Potential X4=Xi1. In der Schaltungsanordnung können dabei so viele Strangschaltungsteilmodule 10Mx vorgesehen sein, wie Modulstränge Mx an die Schaltungsanordnung angeschlossen werden sollen.

Der modulare Aufbau der Schaltungsanordnung kann dazu dienen, in großen Anlagen den Verdrahtungsaufwand zwischen Wechselrichter 50 und Modulsträngen Mx zu verringern. Mehrere der in Figur 6E gezeigten, dem Wechselrichter zugeordneten Ausgangsschaltungsteilmodule 10E können in Parallelschaltung geschaltet werden, so dass eine flexible Skalierung in der Leistung mit standardisierten Ausgangsschaltungsteilmodulen möglich ist.

An die Schaltungsanordnung gemäß zweiter Ausführungsform kann ein einphasiger Wechselrichter angeschlossen werden, wodurch die Schaltungsanordnung im geteilten Gleichspannungszwischenkreis auch die pendelnde Energie puffern kann, die durch die pulsierende Leistungsabgabe mit der doppelten Netzfrequenz auftritt. Während an dem internen Zwischenkondensator C4 und dem internen Außenkondensator C5 (siehe Figur 6B) hohe Spannungshübe auftreten können bzw. dürfen, können die Spannungen an den Modulsträngen Mx durch die Steller Steller_1x bzw. Steller_1x' konstant gehalten werden. Aufgrund der hohen möglichen Spannungshübe an den internen Kondensatoren C4 und C5 bleibt der Kondensatoraufwand insgesamt gering. Dieses Konzept zur Pufferung der pulsierenden Energie eignet sich sowohl für einen einzelnen, als auch für mehrere Modulstränge.

Dritte Ausführungsform

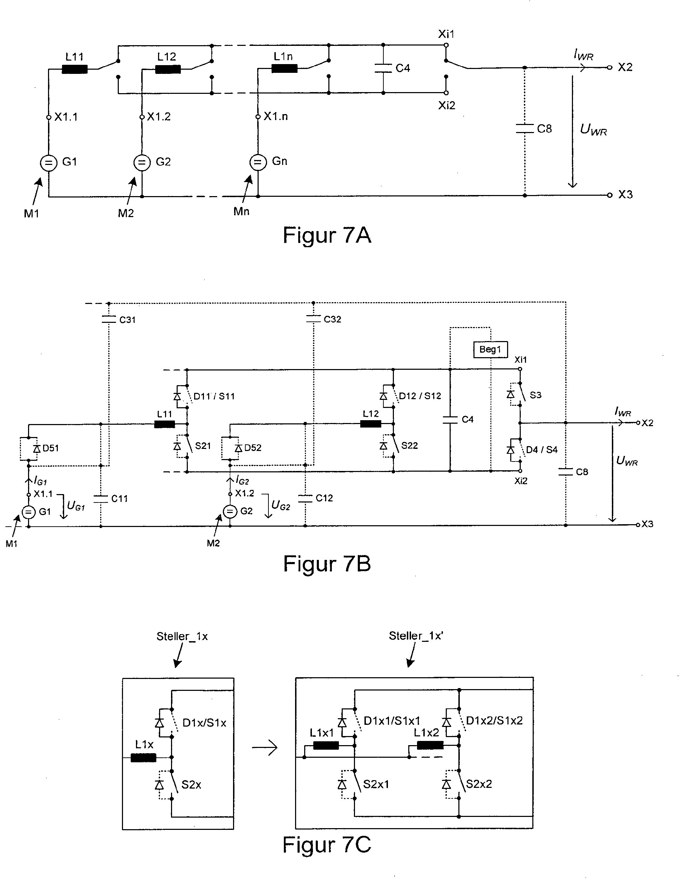

**Figur 7A** zeigt in einem abstrahierten Schaltbild eine Schaltungsanordnung zum Abgreifen von elektrischer Leistung von mehreren Modulsträngen Mx gemäß einer dritten Ausführungsform. Eine beliebige Anzahl Modulstränge M1, M2 bis Mn sind an eine Anpassschaltung angeschlossen, die zwei interne Potentiale Xi1 und Xi2 eines internen Gleichspannungszwischenkreises aufweist. Die einzelnen Modulstränge Mx werden über jeweils eine Modulstrangdrossel L1x und einen abstrahiert gezeigten Modulstrangschalter S2x* an eines der beiden internen Potentialniveaus Xi1 und Xi2 angeschlossen. Modulstrangdrossel L1x und Modulstrangschalter S2x sind Bestandteil eines Modulstrangstellers Steller_1x (vgl. auch Fig. 7C). Ein in Fig. 7A abstrahiert gezeigter Ausgangsschalter S3* ist gepulst getaktet und verbindet jeweils eines der beiden internen Potentiale Xi1, Xi2 mit dem angepassten zweiten Ausgangspotential X2. Die Schaltungsanordnung gemäß dritter Ausführungsform weist keine Ausgangsdrossel auf.

**Fig 7B** zeigt in einem Schaltbild eine Schaltungsanordnung gemäß dritter Ausführungsform mit mehr Details als in der abstrahierten Darstellung der Figur 7A gezeigt, siehe oben. Die Schaltungsanordnung gemäß dritter Ausführungsform ist in Figur 7B für genau zwei Modulstränge M1 und M2 gezeigt. Der Minuspol der Modulstränge M1 und M2 ist mit dem Minuspol eines ausgangsseitigen Gleichspannungszwischenkreises verbunden, dem gemeinsamen ersten Ausgangspotentialpunkt X3. Ein Zwischenkondensator C4 zwischen den beiden internen Potentialen Xi1 und Xi2 kann wahlweise mit seinem Plus- oder Minuspol mit dem Pluspol des ausgangsseitigen Gleichspannungszwischenkreises verbunden werden, dem angepassten zweiten Ausgangspotentialpunkt X2. Jeder positive Pol der Modulstränge Mx ist über einen Eingang X1.x mit einem Anschluss der Modulstrangdrossel L1x (oder mehrerer Modulstrangteildrosseln L1x1 und L1x2, vgl. Fig. 7C) der Anpassschaltung verbunden. Es können auch mehr als zwei Modulstrangdrosseln pro Steller verwendet werden. Der jeweils andere Anschluss der Modulstrangdrossel L1x (bzw. der Modulstrangteildrosseln L1x1 und L1x2) kann entweder mit dem positiven oder mit dem negativen Pol des Zwischenkondensators C4 verbunden werden, und somit mit einem der beiden internen Potentiale des internen Gleichspannungszwischenkreises.

Die Schaltungsanordnung kann auch mit umgekehrter Polarität aufgebaut werden. Die Wahl der Verbindungspfade für den Strom erfolgt über Leistungshalbleiter, die mittels Pulsbreitenmodulation angesteuert werden.

Die Schaltungsanordnung gemäß dritter Ausführungsform entspricht weitgehend der Schaltungsanordnung gemäß der zweiten Ausführungsform. Im Unterschied zu dieser weist die Schaltungsanordnung gemäß dritter Ausführungsform keine Ausgangsdrossel L2 am angepassten zweiten Ausgangspotentialpunkt auf. Weiterhin weist die Schaltungsanordnung gemäß dritter Ausführungsform nicht die Kondensatoren C5, C6, C7o und C7u auf. Die Schaltungsanordnung gemäß dritter Ausführungsform weist somit weniger Bauelemente auf, bzw. kommt mit weniger Bauelementen aus. Weiterhin ermöglicht die Schaltungsanordnung die Pufferung pulsierender Energie im Zwischenkondensator C4 bei Anschluss eines einphasigen Wechselrichters. Ein modularer verteilter Aufbau wie für die zweite Ausführungsform in Figur 6E gezeigt ist aufgrund der taktfrequenten Potentialsprünge des Zwischenkondensators C4 gegenüber dem gemeinsamen ersten Ausgangspotential X3 weniger sinnvoll.

**Figur 7C** zeigt in einem Schaltbild, wie die Modulstrangsteller Steller_1x durch phasenversetzt getaktete Modulstrangsteller Steller_1x' ersetzt werden können, analog zu Fig. 6D.

Vierte Ausführungsform

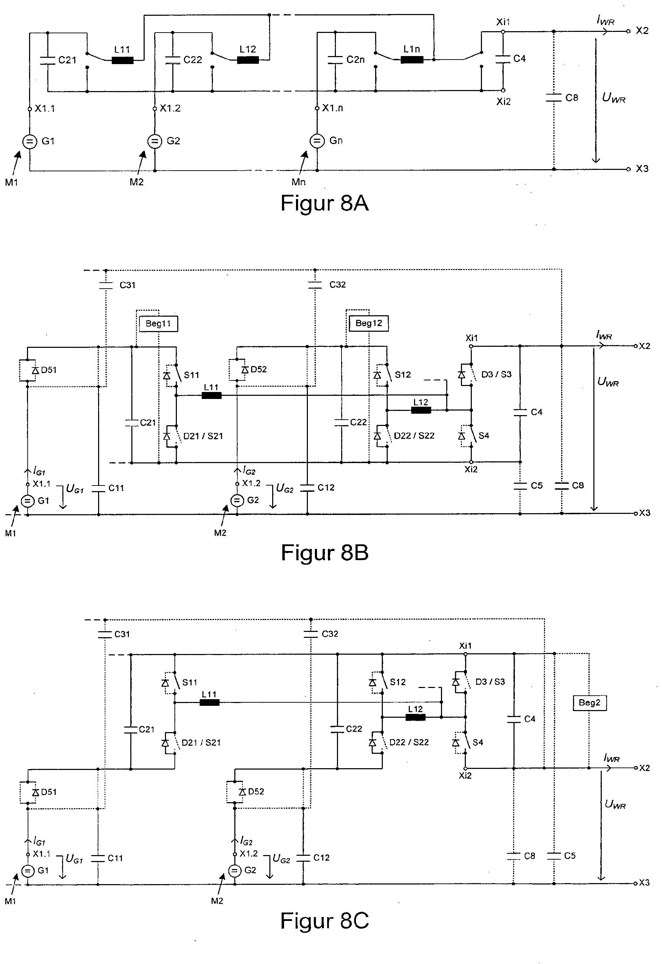

**Figur 8A** zeigt in einem abstrahierten Schaltbild eine Schaltungsanordnung zum Abgreifen elektrischer Leistung von mehreren Modulsträngen gemäß einer vierten Ausführungsform.

Eine detailliertere Ausführung der Schaltungsanordnung gemäß der vierten Ausführungsform ist in **Figur 8B** gezeigt. Die Minuspole mehrerer Modulstränge Mx sind miteinander und dem gemeinsamen ersten Ausgangspotentialpunkt X3 verbunden, der den Minuspol eines ausgangsseitigen Gleichspannungszwischenkreises bereitstellt. Parallel zu jedem Modulstrang Mx als Gleichspannungsquelle Gx ist ein Modulstrangzwischenspeicherkondensator C1x geschaltet. Jedem Modulstrang Mx ist ein Modulstrangkondensator C2x zugeordnet, der mit einem Anschluss mit dem jeweiligen Modulstrang Mx über einen Eingang X1.x der Anpassschaltung verbunden ist. Die anderen Anschlüsse der genannten Modulstrangkondensatoren C2x sind über eine gemeinsame Leitung miteinander verbunden.

Ein interner Gleichspannungszwischenkreis der Anpassschaltung weist einen Zwischenkondensator C4 auf, der mit einem Anschluss mit dem Pluspol des ausgangsseitigen Gleichspannungszwischenkreises verbunden ist, dem angepassten zweiten Ausgangspotentialpunkt X2. Der andere Anschluss des Zwischenkondensators C4 ist mit der Leitung verbunden, die auch die Modulstrangkondensatoren C2x verbindet. Jeder Modulstrang Mx weist weiterhin eine oder mehrere Modulstrangdrosseln L1x auf, die mit einem Anschluss entweder mit dem einen oder dem anderen Anschluss des dem Modulstrang zugeordneten Modulstrangkondensators C1x verbunden werden können. Die anderen Anschlüsse der Modulstrangdrosseln L1x sind miteinander verbunden und können entweder mit dem einen oder dem anderen Anschluss des Zwischenkondensator C4 verbunden werden.

Die Schaltung kann alternativ auch umgekehrt gepolt aufgebaut werden. Die Wahl der Verbindungspfade für den Stromfluss erfolgt über Leistungshalbleiter, die mittels einer Pulsbreitenmodulation angesteuert werden.

**Figur 8C** zeigt in einem Schaltbild mögliche Modifikationen der Schaltungsanordnung gemäß viertem Ausführungsbeispiel. Dabei sind die optionalen Schaltungselemente gestrichelt dargestellt. Die Schaltungsanordnung gemäß vierter Ausführungsform erlaubt den Anschluss beliebig vieler Modulstränge Mx an einen Wechselrichter.

Die gemeinsame Leitung, die die Modulstrangkondensatoren C2x und den Zwischenkondensator C4 verbindet, kann entweder ein negatives Potential wie in Figur 8B gezeigt oder ein positives Potential wie in Figur 8C gezeigt gegenüber dem angepassten zweiten Ausgangspotentialpunkt X2 aufweisen.

In Reihe zu den Gleichspannungsquellen Gx der Modulstränge Mx können Schutzdioden D5x eingebaut werden. Diese verhindern, dass bei einem externen Kurzschluss an den Modulsträngen negative Ströme $I_{Gx}$ fließen. Außerdem schützen sie in diesem Fehlerfall die Leistungshalbleiter vor zu hohen Spannungen.

Als Modulstrangdiodenschalter S1x und als Zusatzausgangsschalter S4 können Transistoren verwendet werden, die bereits eine Paralleldiode aufweisen, wie zum Beispiel bei MOSFETs sowie den meisten IGBTs.

Parallel zu den Modulstrangdioden D2x und zur Ausgangsdiode D3 können Modulstrangschalter S2x und ein Ausgangsschalter S3 eingebaut werden. Diese werden immer dann angesteuert, wenn die korrespondierenden Modulstrangdiodenschalter S1x bzw. ein Zusatzausgangsschalter S4 nicht leiten. Wenn MOSFETs verwendet werden, verringert sich dabei die Spannung über den Dioden auf einen Wert von deutlich unter ihrer Vorwärtsspannung, was die Durchlassverluste weiter verringert.

In einem bauteilarmen Aufbau der Schaltungsanordnung werden nur die Kondensatoren C1x, C2x, C4 und C8 verwendet. Die genannten Kondensatoren können teilweise entfallen, wenn dafür Kondensatoren an anderer Stelle angeordnet werden, zum Beispiel die Kondensatoren C3x und C5. Hierbei ergeben sich viele Möglichkeiten, die gewünschte Schaltungsfunktion zu ermöglichen.

Die Modulstrangzwischenspeicherkondensatoren C1x können mit ihrem Pluspol entweder an die Anode oder an die Kathode der Schutzdioden D5x angeschlossen sein, sofern vorhanden.

Die Kondensatoren C3x können mit einem Pol entweder an die Anode oder an die Kathode der Schutzdioden D5x angeschlossen werden, sofern vorhanden.

Zur Begrenzung der Spannung über den Leistungshalbleitern können Begrenzungsvorrichtungen Beg1x bzw. Beg2 für den Fehlerfall sowie für den Fall abgeschalteter Steuerung eingefügt werden, die detaillierter in Figur 13 gezeigt sind.

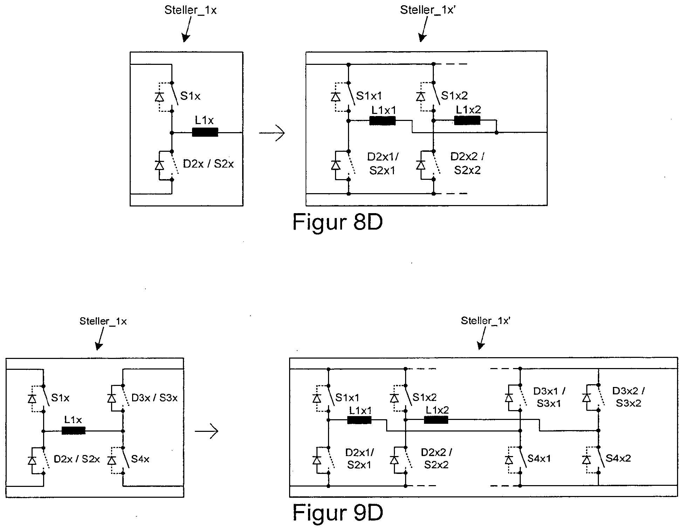

Die aus den Bauelementen S1x, D2x/S2x und L1x bestehenden Modulstrangsteller Steller_1x können um weitere Parallelzweige erweitert werden, die idealerweise phasenversetzt getaktet werden. Ein solcher phasenversetzte getakteter Modulstrangsteller Steller_1x' ist in **Figur 8D** gezeigt.

Fünfte Ausführungsform

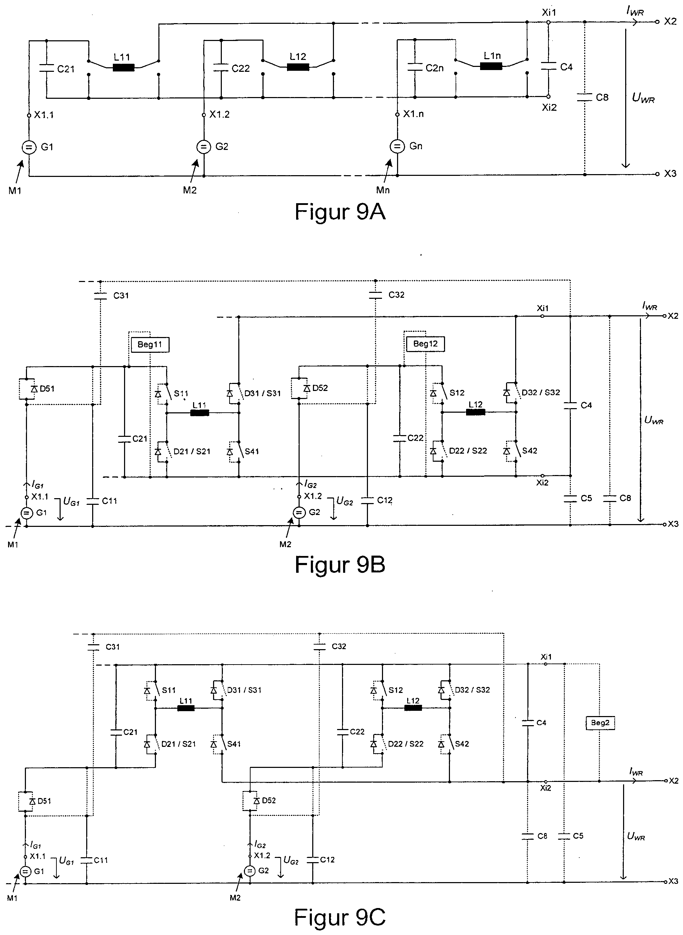

**Figur 9A** zeigt in einem abstrahierten Schaltbild eine Schaltungsanordnung zum Abgreifen elektrischer Leistung von mehreren Modulsträngen gemäß einer fünften Ausführungsform. Die Schaltungsanordnung ist detaillierter in **Figur 9B** gezeigt.

Bei der Schaltungsanordnung gemäß fünfter Ausführungsform sind die Minuspole mehrerer Modulstränge Mx miteinander verbunden und auf den Minuspol eines ausgangsseitigen Gleichspannungszwischenkreises gelegt, dem gemeinsamen ersten Ausgangspotentialpunkt X3. Jedem Modulstrang Mx ist ein Modulstrangkondensator C2x zugeordnet, der mit einem Anschluss mit dem Pluspol des jeweiligen Modulstrangs Mx über den Eingang X1.x der Anpassschaltung verbunden ist. Weiterhin weist der interne Gleichspannungszwischenkreis einen Zwischenkondensator C4 auf, der mit einem Anschluss mit dem Pluspol des ausgangsseitigen Gleichspannungszwischenkreises verbunden ist, dem angepassten zweiten Ausgangspotential X2. Der andere Anschluss des Zwischenkondensators C4 ist mit den anderen Anschlüssen der Modulstrangkondensatoren C2x über eine gemeinsame Leitung verbunden, die auf einem internen Potential der Anpassschaltung liegt, in Figur 9B auf Xi2 und den Figuren 9C auf Xi1.

Jedem Modulstrang Mx ist weiterhin eine oder mehrere Modulstrangdrosseln L1x zugeordnet, die mit einem Anschluss entweder mit dem einen oder dem anderen Anschluss des Modulstrangkondensators C2x verbunden werden können. Mit dem anderen Anschluss kann die Modulstrangdrossel L1x entweder mit dem einen oder dem anderen Anschluss des dem internen Gleichspannungszwischenkreis zugeordneten Zwischenkondensators C4 verbunden werden.

Die Schaltung kann mit umgekehrter Polarität aufgebaut werden. Die Wahl der Verbindungspfade für den Stromfluss erfolgt über Leistungshalbleiter, die mittels einer Pulsbreitenmodulation angesteuert werden. Die Schaltungsanordnung gemäß der fünfter Ausführungsform ist in zwei Alternativen in den Figuren 9B und 9C für jeweils zwei Modulstränge M1 und M2 gezeigt, kann aber zum Anschluss beliebig vieler Modulstränge Mx dienen, wie abstrahiert in Figur 9A gezeigt.

Modifikationsmöglichkeiten sind in den Figuren 9B und 9C durch gestrichelte Linien gekennzeichnet. So kann die gemeinsame Leitung, die die Modulstrangkondensatoren C2x und den Zwischenkondensator C4 verbindet entweder ein negatives Potential (wie in Figur 9B gezeigt) oder ein positives Potential (wie in Figur 9C gezeigt) gegenüber dem Pluspol des ausgangsseitigen Gleichspannungszwischenkreises aufweisen, dem angepassten zweiten Ausgangspotentialpunkt X2.

In Reihe zu den Gleichspannungsquellen Gx können Schutzdioden D5x eingebaut werden. Diese verhindern, dass bei einem externen Kurzschluss der Gleichspannungsquellen Gx negative Ströme $I_{Gx}$ fließen. Sie schützen in diesem Fehlerfall die Leistungshalbleiter vor zu hohen Spannungen.

Als Modulstrangschalter S1x und Zusatzmodulstrangschalter S4x können Transistoren verwendet werden, die bereits eine Paralleldiode aufweisen, wie zum Beispiel bei MOSFETs oder den meisten IGBTs.

Parallel zu den Modulstrangdioden D2x und Modulstrangzusatzdioden D3x können Modulstrangschalter S2x und Modulstrangzusatzschalter S3x verschaltet sein. Diese werden dann angesteuert, wenn die korrespondierenden Modulstrangdiodenschalter S1xbzw. Zusatzmodulstrangschalter S4x nicht leiten. Bei Verwendung von MOSFETs verringert sich hierbei die Spannung über den Dioden auf einen Wert von deutlich unter ihrer Vorwärtsspannung, was die Durchlassverluste weiter verringert.

Im minimalistischen Fall weist die Schaltungsanordnung nur die Kondensatoren C1x, C2x, C4 und C8 auf. Die genannten Kondensatoren können teilweise entfallen, wenn hierfür Kondensatoren an anderer Stelle angeordnet werden, wie zum Beispiel die Kondensatoren C3x und C5.

Modulstrangzwischenspeicherkondensatoren C1x können mit ihrem Pluspol entweder an die Anode oder an die Kathode der Schutzdioden D5x angeschlossen sein, sofern vorhanden.

Die Kondensatoren C3x können mit einem Pol entweder an die Anode oder die Kathode der Schutzdioden D5x angeschlossen werden, sofern vorhanden.

Weiterhin können Vorrichtungen Beg1xbzw. Beg2 als Begrenzung der Spannung über den Leistungshalbleitern vorgesehen sein.

Die Modulstrangsteller Steller_1x, die als Bauteile den Modulstrangdiodenschalter S1x, die Modulstrangdiode D2x bzw. den Modulstrangschalter S2x, die Modulstrangzusatzdiode D3x bzw. den Modulstrangzusatzschalter S3x, den Zusatzmodulstrangschalter S4x und die Modulstrangdrossel L1x aufweisen, können um weitere Parallelzweige erweitert sein, die bevorzugt phasenversetzt getaktet werden, wie als phasenversetzt getakteter Modulstrangsteller Steller_1x' in **Figur 9D** gezeigt.

## Sechste Ausführungsform

In der nachveröffentlichten Patentanmeldung DE 102013007077.5 wird eine Schaltungsanordnung zur Wandlung zwischen einer Gleichspannung und einer Wechselspannung beschrieben, bei der ein Pol des Gleichspannungsanschlusses mit einem Pol des Wechselspannungsanschlusses verbunden ist. Diese Schaltung dient zum Beispiel zum Anschluss eines einzelnen Modulstrangs an das Stromnetz und als eine Art Wechselrichter. Zur Beschreibung und Funktionsweise dieses speziellen Wechselrichters wird auf die nachveröffentlichte Patentanmeldung verwiesen.

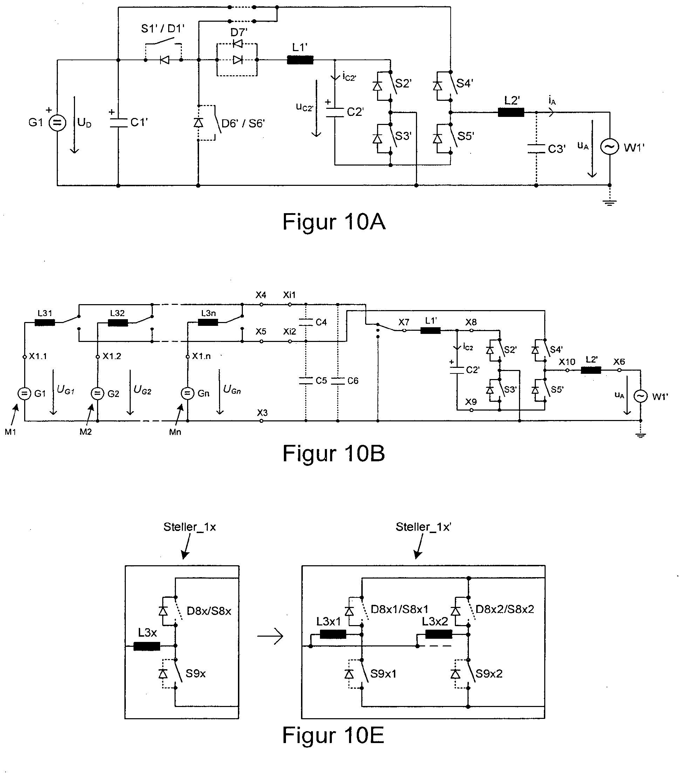

In **Figur 10A** ist in einem Schaltbild gezeigt, wie diese spezielle Wechselrichterschaltung an eine Wechselspannungslast bzw. Wechselspannungsquelle W1 angeschlossen ist, zum Beispiel an ein Inselnetz oder an das öffentliche Stromnetz.

In Verbindung mit dieser speziellen Wechselrichterschaltung ergibt sich eine Schaltungsanordnung zum Abgreifen elektrischer Leistung mehrerer Modulstränge gemäß einer sechsten Ausführungsform, die abstrahiert im Schaltbild der **Figur 10B** gezeigt ist. Bei der nachveröffentlicht beschriebenen Wechselrichterschaltung ist es durch eine Modifikation möglich, gleichstromseitig die Leistung für die positive und die negative Halbwelle der Netzspannung getrennt einzuspeisen. Der wechselrichterseitige Ausgangssteller bzw. ausgangsseitige Gleichspannungszwischenkreis der erfindungsgemäßen Anpassschaltung zum Betrieb mehrerer Solarmodule kann dadurch entfallen, da dessen bzw. deren Funktionsweise quasi von dem speziellen Wechselrichter übernommen wird/werden. Außerdem kann der zulässige Eingangsspannungsbereich der Wechselrichterschaltung nach unten erweitert werden. Als Ausgangsspannung wird in diesem Ausführungsbeispiel die Wechselrichterspannung $U_A$ gesteuert und/oder geregelt.

Die Schaltungsanordnung gemäß sechster Ausführungsform weist einen geteilten Gleichspannungszwischenkreis auf, der eine Reihenschaltung von mindestens zwei Kondensatoren aufweist, einem Zwischenkondensator C4 und einem Außenkondensator C5. Die Minuspole eines oder mehrerer Modulstränge Mx ist/sind mit dem Minuspol des geteilten Gleichspannungszwischenkreises verbunden, dem gemeinsamen ersten Ausgangspotentialpunkt X3. Jeder positive Pol der Modulstränge Mx ist als zweiter elektrischer Potentialpunkt über einen Eingang X1.x der Anpassschaltung mit einem Anschluss einer oder mehrerer Modulstrangdrosseln L3x verbunden.

Der jeweils andere Anschluss der Drossel L3x kann entweder mit dem internen Potential X4=Xi1 oder dem internen Potential X5=Xi2 des geteilten Zwischenkreises verbunden werden. Ein Wechselrichterkondensator C2' der nachveröffentlichten Wechselrichterschaltung ist zwischen zwei Anschlüssen X8 und X9 der Wechselrichterschaltung angeordnet und dient zur Zwischenspeicherung von Energie. Ein Anschluss X8 der Wechselrichterschaltung kann über eine Wechselrichterdrossel L1' entweder mit dem gemeinsamen ersten Ausgangspotentialpunkt X3, mit dem Anschluss X4 auf dem ersten internen Potentialpunkt Xi1 oder mit keinem von beiden verbunden werden. Ein Pol der Wechselspannungslast bzw. -quelle W1' ist mit dem gemeinsamen ersten Ausgangspotentialpunkt X3 verbunden. Der andere Pol der Wechselspannungslast bzw. -quelle W1' kann über eine Ausgangsdrossel L2' wahlweise mit dem Anschluss X9 oder dem Anschluss X5 verbunden werden, dem zweiten internen Potentialpunkt Xi2.

Während des größten Teils der Periode, in der das Vorzeichen der Spannung $U_A$ dem Vorzeichen der Spannung $U_{Gx}$ entspricht, kann Energie von der Gleichstromseite zur Wechselstromseite über einen Tiefsetzsteller übertragen werden bzw. Energie von der Wechselstromseite zur Gleichstromseite über einen Hochsetzsteller übertragen werden. Der Steller tauscht Energie mit der Gleichstromseite zwischen den Punkten X5 und X3 aus.

Während des größten Teils der Periode, in der das Vorzeichen der Spannung $U_A$ umgekehrt zum Vorzeichen der Spannung $U_{Gx}$ ist, wird Energie von der Gleichstromseite zur Wechselstromlast W1' bzw. von der Wechselstromquelle W1' zur Gleichstromseite dadurch übertragen, dass im Wechselrichterkondensator C2' kleine Energiemengen zwischengespeichert werden. Die Energie wird dabei gleichstromseitig zwischen den Potentialen X4 und X3 ausgetauscht. Die Wechselrichterdrossel L1' dient zur Begrenzung des Kondensatorstroms $I_{C2}$ des Wechselrichterkondensators C2'.

Die Schaltungsanordnung kann mit umgekehrter Polarität aufgebaut sein. Die Wahl der Verbindungspfade des Stromflusses erfolgt über Leistungshalbleiter, die mittels einer Pulsbreitenmodulation angesteuert sind.

Die Schaltungsanordnung gemäß sechster Ausführungsform erlaubt den Anschluss von einem bis beliebig vielen Modulsträngen und stellt am Ausgang einen Wechselstrom zur Verfügung. Ein eigener Wechselrichter ist somit nicht notwendig. Die Schaltungsanordnung gemäß sechster Ausführungsform ist sowohl zur Wandlung von Gleichstrom in Wechselstrom als auch zur Wandlung von Wechselstrom in Gleichstrom geeignet.

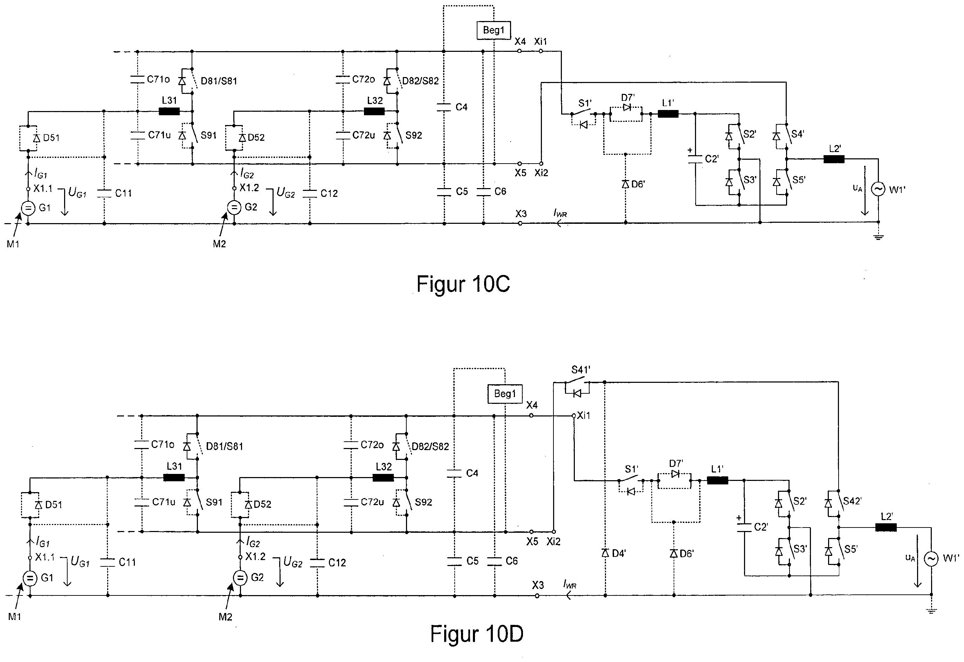

Die Schaltungsanordnung gemäß sechster Ausführungsform ist speziell für zwei Solarmodulstränge detaillierter im Schaltbild der **Figur 10C** gezeigt. Dabei wurden die Leistungshalbleiter so ausgewählt, dass nur noch eine Übertragung von Energie von der Gleichstromseite zur Wechselstromseite erfolgt.

In dieser Ausführungsform der Schaltungsanordnung werden Modulstrangschalter S9x mit einer Pulsbreitenmodulation getaktet. Die Spannung über dem Zwischenkondensator C4 entspricht mindestens der Differenz zwischen höchster und niedrigster individueller Modulstrangspannung $U_{Gx}$, kann jedoch viel kleiner als die Netzspannungsamplitude ausgebildet sein. Dies führt zu kleineren Verlusten in den Modulstrangschaltern S9x, Modulstrangdioden D8x und ggf. Modulstrangschaltern S8x, sowie zu kleinen Modulstrangdrosseln L3x.

Die Schaltungsanordnung ist dazu ausgebildet, im geteilten Gleichspannungszwischenkreis pendelnde Energie zu puffern, die durch die pulsierende Leistungsabgabe mit der doppelten Netzfrequenz auftritt. Während an dem internen Zwischenkondensator C4, dem Außenkondensator C5 bzw. dem Vorausgangskondensator C6 hohe Spannungshübe auftreten können, können die Spannungen an den Modulsträngen Mx durch Modulstrangsteller Steller_x1 konstant gehalten werden, die jeweils einen Modulstrangschalter S9x, eine Modulstrangdiode D8x bzw. einen Modulstrangschalter S8x aufweisen können. Aufgrund der hohen möglichen Spannungshübe an den internen Kondensatoren bleibt der gesamte Kondensatoraufwand gering. Dieses Konzept zur Pufferung der pulsierenden Energie eignet sich sowohl für einen einzelnen als auch für mehrere Modulstränge.

Der Vorgang des resonanten Ladens des Wechselrichterkondensators C2' in der Wechselrichterschaltung, die in Figur 10A gezeigt ist, erfordert eine höhere Wechselrichtereingangsspannung $U_D$ (also z.B. vom Modulstrang) als die Amplitude der Wechselspannung $U_A$. Mit dem zusätzlich in der Schaltungsanordnung gemäß sechstem Ausführungsbeispiel vorgesehenen Modulstrangsteller Steller_1x verringert sich die minimale Eingangsspannung $U_{Gx}$ der Gleichspannungsquellen Gx (vgl. Figur 10C) gegenüber der minimalen Eingangsspannung $U_D$ am Monomodulstrang (vgl. Figur 10A). Durch die zusätzlichen Modulstrangsteller kann somit der zulässige Eingangsspannungsbereich der Wechselrichterschaltung nach unten erweitert werden.

Die Schaltungsanordnung gemäß sechster Ausführungsform kann modifiziert werden, wie zum Beispiel in **Figur 10D** in einem Schaltbild durch gestrichelte Bauteile und Schaltverbindungen gezeigt.

In Reihe zu den Gleichspannungsquellen Gx können Schutzdioden D5x verschaltet sein. Diese verhindern, dass bei einem externen Kurzschluss der Gleichspannungsquellen Gx negative Ströme $I_{Gx}$ fließen. Außerdem schützen sie in diesem Fehlerfall die Leistungshalbleiter vor zu hoher Spannung.

Als Modulstrangschalter S9x können Transistoren verwendet werden, die bereits eine Paralleldiode aufweisen, wie zum Beispiel bei MOSFETs oder den meisten IGBTs. Parallel zu den Modulstrangdioden D8x können Modulstrangschalter S8x eingebaut werden. Diese werden dann angesteuert, wenn die korrespondierenden Modulstrangschalter S9x am selben Modulstrang Mx nicht leiten. Sofern MOSFETs verschaltet sind, verringert sich dabei die Spannung über den Modulstrangdioden D8x auf einen Wert von deutlich unter ihrer Vorwärtsspannung, was die Durchlassverluste weiter verringert.

Im möglichst bauteilarmen Fall werden nur die Modulstrangzwischenspeicherkondensatoren C1x sowie der Zwischenkondensator C4, der Außenkondensator C5 und der Wechselrichterkondensator C2' verschaltet. Einige der genannten Kondensatoren, zum Beispiel C1x, C4 und C5, können teilweise entfallen, wenn statt dessen Kondensatoren an anderer Stelle verschaltet sind, zum Beispiel die Kondensatoren C7xo, C7xu, C6.

Anstatt einer einfachen Ausgangsdrossel L2' kann eine kompliziertere Filteranordnung zur Glättung des Wechselrichterstroms durch die Wechselspannungssenke W1' verwendet werden.

Die Modulstrangzwischenspeicherkondensatoren C1x können mit ihrem Pluspol entweder an die Anode oder an die Kathode der Schutzdioden D5x angeschlossen werden, sofern vorhanden.

Zur Begrenzung der Spannung über den Leistungshalbleitern im Fehlerfall und bei abgeschalteter Steuerung kann eine Begrenzungsschaltung Beg1 (vgl. Figuren 10C und 10D) verschaltet sein.

Zum Wechselrichterschalter S1' parallel kann eine Diode geschaltet sein. Dies ist bei vielen käuflichen Bauelementen bereits der Fall.

Die Wechselrichterdiode D7' kann weggelassen werden, wenn der Wechselrichterschalter S1 eine ausreichende Sperrfähigkeit in Rückwärtsrichtung zeigt.

Eine Wechselrichterdiode D6' kann hinzugefügt werden, um den Wechselrichterschalter S1' vor Überspannung zu schützen, wenn dieser geöffnet wird, solange durch Wechselrichterdrossel L1' noch Strom fließt.

In **Figur 10D** ist in einem Schaltbild eine modifizierte Schaltungsanordnung gezeigt, bei der ein Wechselrichterausgangsschalter S4' durch eine Reihenschaltung zweier Wechselrichterausgangsschalter S41' und S42' ersetzt ist. Dadurch werden die notwendigen Sperrspannungen an den Wechselrichterausgangsschaltern geringer. Optional kann eine Wechselrichterschutzdiode D4'zum Schutz von Wechselrichterausgangsschalter S41' vor Überspannungen hinzugefügt werden.

**Figur 10E** zeigt in einem Schaltbild einen Modulstrangsteller Steller_1x, der als Bauelemente die Modulstrangdiode D8x bzw. den Modulstrangschalter S8x, den Modulstrangschalter S9x und die Modulstrangdrossel L3x aufweisen kann. Weiterhin zeigt Figur 10E einen Modulstrangsteller Steller_1x', der um weitere Parallelzweige erweitert ist, die idealerweise versetzt getaktet werden, und durch den der Modulstrangsteller Steller_1x ersetzt werden kann.

Die Schaltungsanordnung gemäß sechster Ausführungsform ist als Kombinationsschaltung ausgebildet. Die in der nachveröffentlichten Anmeldung beschriebene Wechselrichterschaltung kann mit jeder der Schaltungsanordnungen gemäß der ersten bis fünften Ausführungsform kombiniert werden. Wird dem nachveröffentlicht beschriebenen Wechselrichter eine Schaltungsanordnung gemäß zweiter oder dritter Ausführungsform vorgeschalten, so kann die Anpassschaltung ohne eigenen ausgangsseitigen Ausgangssteller Steller_2 bzw. Steller_2' ausgebildet sein. Dies spart Kosten und führt zu geringeren Verlusten. Der zulässige Eingangsspannungsbereich des Wechselrichters wird nach unten erweitert.

Realisierung einzelner Schaltungselemente

**Figur 11** zeigt in einem Schaltbild, wie die in den Schaltbildern der Figuren gezeigten Schalter mit zwei Verbindungspfaden der Anpassschaltung durch Leistungshalbleiter realisiert sein können, nämlich z.B. als MOSFETs. Anstatt MOSFETs können auch andere Halbleitertechnologien, wie z.B. IGBTs, JFETs, Bipolartransistoren oder Dioden verschaltet sein.

**Figur 12** zeigt in einem Schaltbild, wie die in den Figuren gezeigten Schalter mit einem Verbindungspfad in den Anpassschaltungen und Wechselrichterschaltungen realisiert sein können. Die Schalter können einen Transistor (z.B. MOSFET, IGBT, JFET oder Bipolartransistor) aufweisen oder eine Reihenschaltung mehrerer solcher Transistoren. Zur Erhöhung der Sperrfähigkeit in Rückwärtsrichtung können Dioden in Reihe geschaltet sein.

**Figur 13** zeigt ein Schaltbild, wie die in den Figuren 5D, 6C, 6E, 7B, 8B, 8C, 9B, 9C, 10C und 10D gezeigten Baugruppen Begx (wobei x für eine natürliche Zahl steht) zur Spannungsbegrenzung realisiert werden können. Die Baugruppe Begx zur Spannungsbegrenzung kann auf verschiedene Arten aufgebaut werden. Sie enthält ein nichtlineares Element NLE und bei Bedarf einen Parallelkondensator oder einen Parallelkondensator und eine Reihendiode.

Das nichtlineare Element NLE ist im einfachsten Fall eine Zenerdiode oder eine Suppressordiode. Um die Stromtragfähigkeit zu erhöhen, kann die Diode um mindestens einen Widerstand und einen Transistor erweitert werden. Alternativ kann auch ein Varistor eingesetzt werden.

Über die Baugruppe fließt im Normalfall kein Strom, so dass nur im Fehlerfall oder bei abgeschalteter Steuerung kurzzeitig Verlustleistung anfällt.

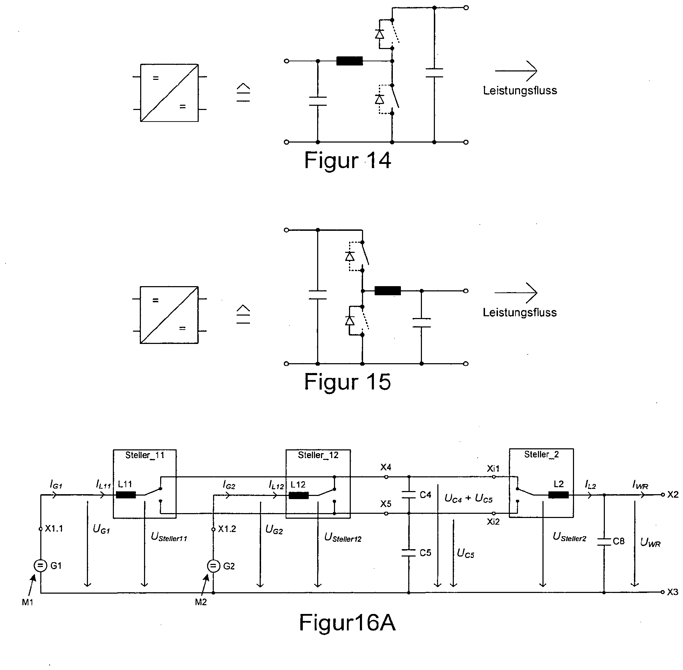

Die **Figuren 14** und **15** zeigen in einem Schaltbild, wie die vorbekannten DC-DC-Wandler der in Figur 1C gezeigten Schaltungsanordnung üblicherweise realisiert sind. Verbreitete DC-DC-Wandlerschaltungen sind der Hochsetzsteller (Figur 14) und der Tiefsetzsteller (Figur 15). Aber auch Sepic-, Cuk- Zeta- oder galvanisch trennende Wandler können als DC-DC-Wandler verschaltet sein.

Ein wesentlicher Vorteil der Schaltungsanordnung nach einer der Figuren 2 bis 4 sowie den Ausführungsformen eins bis sechs ist es, dass im Gegensatz zu konventionellen DC-DC-Stellern/Wandlern nur ein Bruchteil der Modulstrangspannungen und ein Bruchteil der Wechselrichtereingangsspannung von Transistoren und Dioden geschaltet werden muss. Damit können Leistungshalbleiter mit verringerter Sperrspannung eingesetzt werden, welche kostengünstiger sind, schneller schalten können und weniger Verluste verursachen. Weiterhin können kleinere Drosseln verschaltet sein, wodurch diese ebenfalls günstiger werden, weniger Platz beanspruchen und ggf. auf kleinere ohmsche Verluste ausgelegt sein können. Durch die reduzierten Verluste steigt der Wirkungsgrad und es verringert sich der Aufwand für die Kühlung der Leistungselektronik. Gerade im Bereich der Photovoltaik wird auf eine aktive Kühlung mit Lüftern aus Lebensdauergründen gerne verzichtet.

Simulation einer Schaltungsanordnung gemäß zweiter Ausführungsform

**Figur 16A** zeigt in einem Schaltbild eine Schaltungsanordnung gemäß der zweiten Ausführungsform, die als Grundlage für eine Simulation einiger Ströme und Spannungsverläufe verwendet wurde. Die Simulation wurde beispielhaft für zwei Modulstränge M1 und M2 durchgeführt.

Die in Figur 16 A gezeigte Schaltungsanordnung wurde mit den folgenden Daten simuliert:

- Modulstrangspannung am ersten Modulstrang M1: $U_{G1}$ = 400 V
- Modulstrangspannung am zweiten Modulstrang M2: $U_{G2}$ = 420 V
- Modulstrangstrom am ersten Modulstrang M1: $I_{G1}$ = 10 A
- Modulstrangstrom am zweiten Modulstrang M2: $I_{G2}$ = 8 A

Dabei wurde die Spannung über dem Zwischenkondensator C5 mit $U_{C5}$ = 398 V geringfügig kleiner als die kleinste Modulstrangspannung $U_{G1}$ gewählt. Die Summe aus den Kondensatorspannungen an den Kondensatoren C4 und C5 wurde mit $U_{C4} + U_{C5}$ = 422 V geringfügig höher als die höchste Modulstrangspannung $U_{G2}$ gewählt. Dies gewährleistet eine Spannungsreserve für die Regelung bei dynamischen Vorgängen.

Die gewünschte Zwischenpotentialspannung $U_{C4}$ am Zwischenkondensator C4 zwischen den beiden internen Potentialen Xi1 und Xi2 kann einer übergeordneten Regelung als Sollwert vorgegeben werden. Der Sollwert muss mindestens der Differenz zwischen niedrigster und höchster Modulstrangspannung entsprechen. Die Spannung $U_{C5}$ am Außenkondensator C5 zwischen dem unteren internen Potential Xi2 und dem gemeinsamen ersten Ausgangspotentialpunkt X3 kann ebenfalls einer übergeordneten Regelung als Sollwert vorgegeben werden. Der Sollwert muss kleiner als die niedrigste Modulstrangspannung sein.

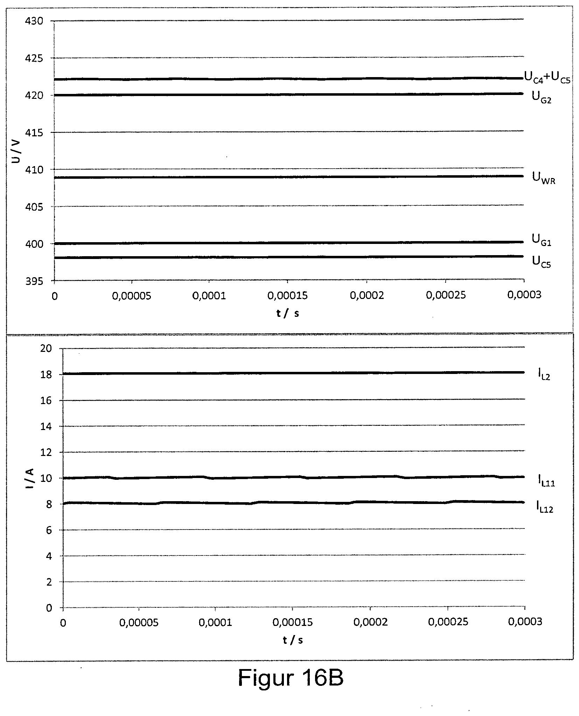

**Figur 16B** zeigt in zwei Diagrammen die Spannungsverhältnisse und Ströme in der simulierten Schaltungsanordnung. Im oberen Diagramm der Figur 16B sind dabei die Modulstrangspannungen $U_{G1}$ und $U_{G2}$ an den Eingängen X1.1 und X1.2 der Anpassschaltung gezeigt, sowie die Spannungen an den beiden Kondensatoren C4 und C5, aus denen sich die beiden internen Potentiale der Anpassschaltung zusammensetzen. Es ergibt sich dabei eine Ausgangsspannung $U_{WR}$, die zwischen der höchsten und niedrigsten individuellen Modulstrangspannung liegt. Der Wert von $U_{WR}$, ergibt sich aus den Gleichungen 1-3, aufgrund von Verlusten kann er noch leicht nach unten abweichen.

Im unteren Diagramm der Figur 16B sind die Ströme $IL_{11}$ und $IL_{12}$ durch die Modulstrangdrosseln L11 und L12 gezeigt, die im Mittel den Modulstrangströmen $I_{G1}$ und $I_{G2}$ entsprechen. Die Modulstrangdrosseln L1x, die den einzelnen Modulsträngen zugeordnet sind, müssen deswegen lediglich für den maximalen individuellen Modulstrangstrom $I_{Gx}$ ausgelegt sein. Lediglich durch die Ausgangsdrossel L2 am wechselrichterseitigen Ausgangsschalter S3 fließt der gesamte Ausgangsdrosselstrom $I_{L2}$, der sich aus der Summe der Modulstrangströme zusammensetzt (vgl. Gleichung 1). Der Ausgangsdrosselstrom $IL_2$ entspricht im Mittel dem Ausgangsstrom $I_{WR}$ der Anpassschaltung, der einem Wechselrichter zugeführt werden kann.

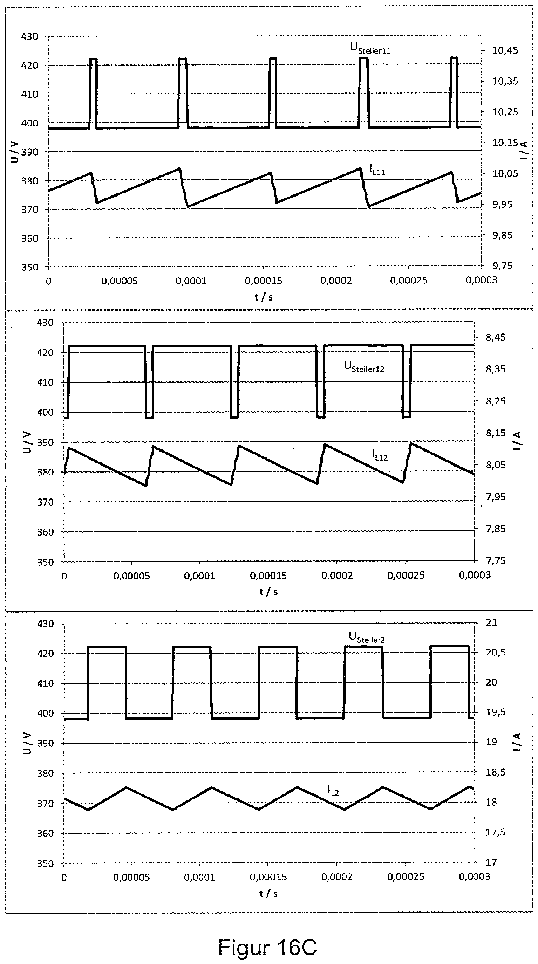

**Figur 16C** zeigt in drei Diagrammen die Spannungen und Ströme an den in der Schaltungsanordnung gemäß zweiter Ausführungsform angeordneten Stellern. Jedem Modulstrang M1, M2,..., Mn ist ein Modulstrangsteller Steller_11, Steller_12, ..., Steller_1n zugeordnet, der jeweils die Modulstrangdrossel L11, L12, ..., L1n und den Modulstrangschalter S11, S12, ..., S1n aufweist. Am Ausgang der Anpassschaltung ist der Ausgangssteller Steller_2 vorgesehen, der die Ausgangsdrossel L2 und den Ausgangsschalter S2 aufweist. Alle Steller sind gepulst getaktet.

Das obere Diagramm in Figur 16C zeigt die getaktete Spannung $U_{Steller11}$ zwischen Modulstrangsteller Steller_11 und dem gemeinsamen ersten Ausgangspotential X3 und den Strom $I_{L11}$ durch die Modulstrangdrossel L11 auf einer vergrößerten Skala.

Das mittlere Diagramm in Figur 16C zeigt die getaktete Spannung $U_{Steller12}$ zwischen Modulstrangsteller Steller_12 und dem gemeinsamen ersten Ausgangspotential X3 und den Strom $IL_{12}$ durch die Modulstrangdrossel L12 auf einer vergrößerten Skala.

Das untere Diagramm in Figur 16C zeigt die getaktete Spannung $U_{Steller2}$ zwischen Ausgangssteller Steller_2 und dem gemeinsamen ersten Ausgangspotential X3 und den Strom $I_{L2}$ durch die Ausgangsdrossel L2 auf einer vergrößerten Skala.

Siebte Ausführungsform

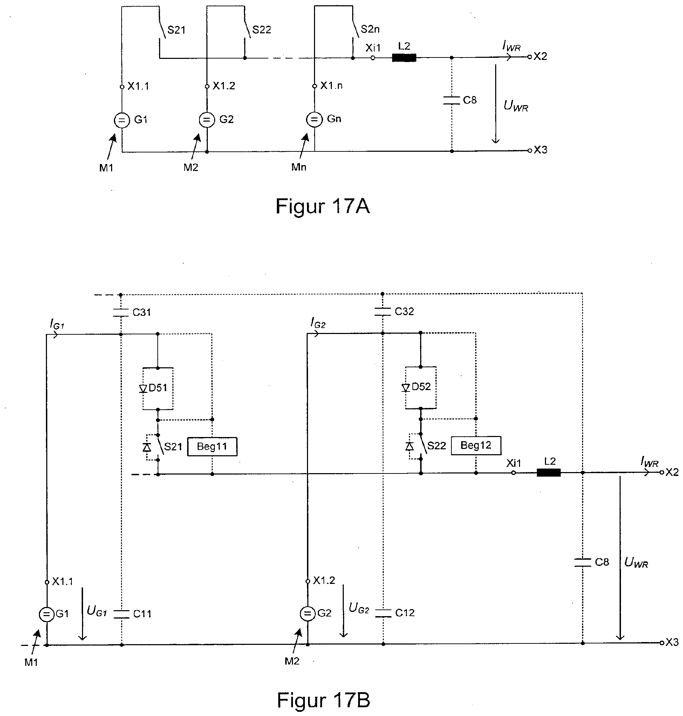

Weiterhin ist in **Figuren 17A** bis **17E** eine siebte Schaltungsvariante der Schaltungsanordnung gezeigt, die auch die Kriterien erfüllt, dass der Ausgangsstrom $I_{WR}$ im Wesentlichen der Summe der individuellen Modulströme $(I_{Gx})$ entspricht und die Ausgangsspannung $U_{WR}$ im Wesentlichen zwischen höchsten individuellen Modulstrangspannung $(U_{Gx})$ und der niedrigsten individuellen Modulstrangspannung $(U_{Gx})$ liegt. Die siebte Schaltungsvariante ähnelt in der Funktion der Schaltung gemäß der ersten Ausführungsform (vgl. Figur 5A).

Die Schaltungsvariante 7 (**Figur 17A**) ist dadurch gekennzeichnet, dass die Minuspole mehrerer DC-Quellen miteinander verbunden sind und den Minuspol eines Gleichspannungszwischenkreises (X3) darstellen. Der Pluspol des Gleichspannungszwischenkreises (X2) ist mit einem Anschluss einer oder mehrerer Drosseln verbunden. Der jeweils andere Anschluss der Drossel(n) kann mit den positiven Anschlüssen aller DC-Quellen verbunden werden. Die Schaltung kann auch mit umgekehrter Polarität aufgebaut werden. Die Wahl der Verbindungspfade erfolgt über Leistungshalbleiter, die teilweise mit einer Pulsbreitenmodulation angesteuert werden.

Die Schaltung ist detailliert für zwei Modulstränge in **Figur 17B** dargestellt.

Zur Erklärung der Funktion wird davon ausgegangen, dass die Dioden D5x zunächst in der Schaltung vorhanden sind.

Sofern die Spannung $U_{G1}$ im jeweiligen Punkt maximaler Leistung kleiner als die Spannung $U_{G2}$ ist, wird der Transistor S21 dauernd angesteuert und der Transistor S22 wird getaktet. Während der Zeit, in der der Transistor S22 angesteuert ist, ist der interne Potentialpunkt Xi1 über D52 und S22 mit X1.2 verbunden. Die Diode D51 verhindert dabei einen Stromfluss von X1.2 nach X1.1. Während der Zeit, in der der Transistor S22 nicht angesteuert ist, ist der interne Potentialpunkt Xi1 über D51 und S21 mit X1.1 verbunden.

Unabhängig davon, wie viele Modulstränge an die Schaltung angeschlossen sind, wird immer derjenige Transistor S2x, der dem Modulstrang mit der niedrigsten individuellen Modulstrangspannung zugeordnet ist, dauernd eingeschaltet. Die restlichen Transistoren S2x werden getaktet.

Auch bei der Schaltungsanordnung gemäß siebter Ausführungsform müssen die Halbeiter S2x nur etwa die Differenz zwischen höchster und niedrigster individueller Modulstrangspannung sperren können. Die Schaltungsvariante 7 ist für wenige (2-3) Modulstränge geeignet. Bei mehreren Modulsträngen werden die Bauteile stark beansprucht, so dass dann eher die zweite oder dritte Ausführungsform verwendet werden sollte. Die Schaltungsvariante 7 ist nur für einen Leistungsfluss von den Modulsträngen zum Ausgang geeignet.

Die Schaltung kann wie folgt modifiziert werden:

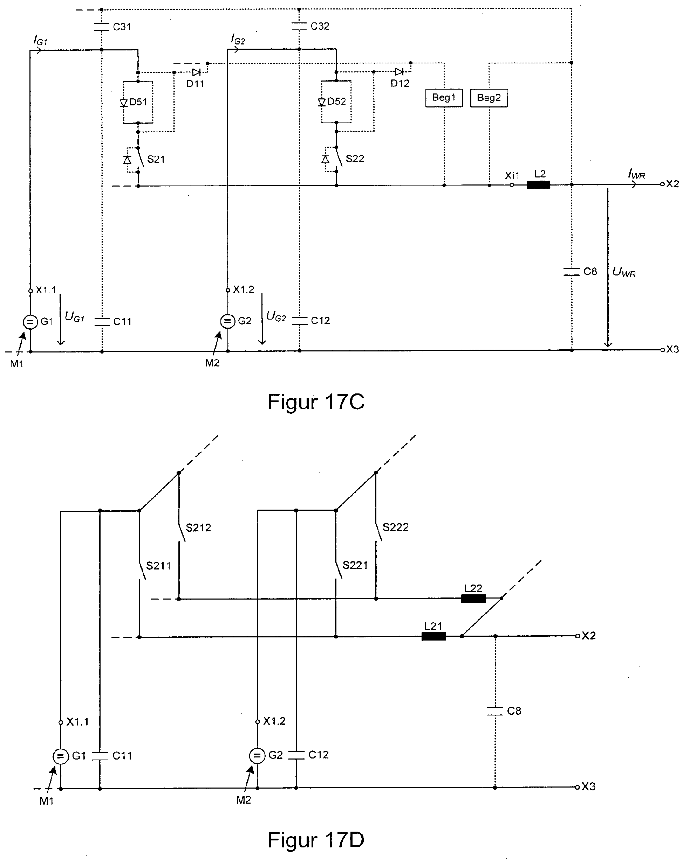

- Die Dioden D5x können entfallen, wenn für die Transistoren S2x solche Bauteile verwendet werden, die eine ausreichende Sperrfähigkeit in Rückwärtsrichtung aufweisen. Dies ist z.B. bei einigen IGBTs und Bipolartransistoren der Fall.
- Für S2x können solche Transistoren verwendet werden, die bereits eine Paralleldiode aufweisen. Dies ist bei allen MOSFETs, sowie bei vielen käuflichen IGBTs der Fall. Wenn die Paralleldiode vorhanden ist, müssen aber auch die Dioden D5x vorhanden sein.
- Im einfachsten Fall werden nur die Kondensatoren C1x und C8 verwendet. Die genannten Kondensatoren können teilweise entfallen, wenn dafür Kondensatoren an anderer Stelle (C3x) platziert werden.
- Es können Baugruppen Beg1x, Beg1 oder Beg2 zur Begrenzung der Spannung über den Leistungshalbleitern im Fehlerfall und bei abgeschalteter Steuerung eingefügt werden. Die Schaltung kann entweder die Spannung über S2x oder die Spannung über D5x und S2x begrenzen.
- Die Baugruppen zur Überspannungsbegrenzung können entweder separat für jeden Modulstrang vorhanden sein **(Figur 17B)** oder einmal für die gesamte Schaltung **(Figur 17C)**. In Figur 17C ist nur entweder Beg 1 oder Beg 2 notwendig.
- Der aus S2x /L2 bestehenden Steller kann um weitere Parallelzweige erweitert werden, die idealerweise phasenversetzt getaktet werden **(Figur 17D).**

Begriffe

Der kleingeschriebene Buchstabe "x" in einem Bezugszeichen und in den Figuren steht für die Ordnungsnummer des bestimmten Modulstrangs x bzw. des zugeordneten Modulstrangs. Z.B. ist im Spezialfall x=3 z.B. eine bestimmte Modulstrangdrossel L13 dem bestimmten Modulstrang M3 zugeordnet bzw. nachgeschalten. Allgemein ist z.B. die Modulstrangdrossel L1x dem Modulstrang Mx zugeordnet und/oder nach- bzw. vorgeschalten.

Allgemein bezeichnet der Begriff "Modulstrang-" gefolgt von einem Bauteil wie z.B. - diode, -kondensator, -schalter, -steller, -drossel etc. das entsprechende Bauteil, das einem speziellen Modulstrang zugeordnet und/oder nach- bzw. vorgeschaltet ist. Einen Spezialfall bilden die Modulstrangzwischenspeicherkondensatoren C1x, die jeweils parallel zu einem speziellen Modulstrang Mx geschalten sind.

Bezüglich der genauen Verschaltungen und Bezeichnung der einzelnen Bauteile wird explizit sowohl auf die Figuren als auch auf die Bezugszeichenliste als Teil der Offenbarung und Beschreibung verwiesen.

**Bezugszeichenliste**

| | |
|---|---|
| 10 | Anpassschaltung |
| 10' | zweiteilige Anpassschaltung |
| 10a | erster Anpassschaltungsteil |
| 10b | zweiter Anpassschaltungsteil |
| 10E | Ausgangsschaltungsteilmodul |
| 10Mx | Strangschaltungsteilmodul |
| 50 | Wechselrichter |
| 50' | Wechselrichter mit Mittenanschluss |

| | |
|---|---|
| 60 | Stromnetz |

| | |
|---|---|
| Beg | Begrenzungsschaltung |
| Beg1x | Begrenzungsschaltung des Modulstrangs x |

| | |
|---|---|
| C | Kondensator |
| C11,C12 | Modulstrangzwischenspeicherkondensator des Modulstrangs 1, 2 |
| C1x, C1n | Moduistrangzwischenspeicherkondensator des Modulstrangs x, n |
| C2 | Wechselrichterkondensator |
| C21, C22 | Modulstrangkondensator des Modulstrangs 1, 2 |
| C2x, C2n | Modulstrangkondensator des Modulstrangs x, n |
| C4 | Zwischenkondensator |
| C5 | Außenkondensator |
| C6 | Vorausgangskondensator |
| C8 | Ausgangskondensator |

| | |
|---|---|
| D | Diode |
| D11, D12 | Modulstrangdiode des Modulstrangs 1, 2 |
| D1x, D1n | Modulstrangdiode des Modulstrangs x, n |
| D21, D22 | Modulstrangdiode des Modulstrangs 1, 2 |
| D2x, D2x | Modulstrangdiode des Modulstrangs x, n |
| D3 | Ausgangsdiode |
| D3x | Modulstrangzusatzdiode des Modulstrangs x |
| D4 | Ausgangsdiode |
| D4' | Wechselrichterschutzdiode |
| D51, D52 | Schutzdiode des Modulstrangs 1, 2 |
| D5x, D5n | Schutzdiode des Modulstrangs x, n |
| D6' | Wechselrichterdiode |
| D7' | Wechselrichterdiode |
| D81, D82 | Modulstrangdioden des Modulstrangs 1, 2 |
| D8x, D8n | Modulstrangdioden des Modulstrangs x, n |

| | |
|---|---|
| G | Gleichspannungsquelle |
| G1, G2 | Gleichspannungsquelle des Modulstrangs 1, 2 |
| Gx, Gn | Gleichspannungsquelle des Modulstrangs x, n |

| | |
|---|---|
| $I_{G1}$, $I_{G2}$ | Strom individueller Modulstrangstrom durch Modulstrang 1, 2 |
| $I_{Gx}$, $I_{Gn}$ | individueller Modulstrangstrom durch Modulstrang x, n |
| $I_{L1x}$ | Strom durch Modulstrangdrossel L1x |
| $I_{L2}$ | Ausgangsdrosselstrom |
| $I_{MPP}$ | Strom im Punkt maximaler Leistungsabgabe |
| $I_{WR}$ | Ausgangsstrom; Wechselrichterstrom |

| | |
|---|---|
| L | Drossel |
| L1' | Wechselrichterdrossel |
| L11, L12 | Modulstrangdrossel des Modulstrangs 1, 2 |
| L1x, L1n | Modulstrangdrossel des Modulstrangs x, n |
| L1x1, L1x2 | Modulstrangteildrossel des Modulstrangs x |
| L2 | Ausgangsdrossel |
| L2' | Ausgangsdrossel |
| L21, L22 | Ausgangsteildrossel |
| L31, L32 | Modulstrangdrossel des Modulstrangs 1, 2 |
| L3x, L3n | Modulstrangdrossel des Modulstrangs x, n |

| | |
|---|---|
| M1, M2 | Modulstrang 1, 2 |
| Mx, Mn | Modulstrang x, n |

| | |
|---|---|
| n | Anzahl der Modulstränge |

$P_{Gx}$    individuelle Modulstrangleistung am Modulstrang x

S            Schalter; Leistungstransistor
S1'          Wechselrichterschalter
S1x          Modulstrangdiodenschalter
S1x1, S1x2   phasenversetzt getakteter Modulstrangdiodenschalter
S21*, S22*   abstrahiert gezeigter Modulstrangschalter des Modulstrangs 1, 2
S2x*, S2n*   abstrahiert gezeigter Modulstrangschalter des Modulstrangs x, n
S21, S22     Modulstrangschalter des Modulstrangs 1, 2
S2x, S2n     Modulstrangschalter des Modulstrangs x, n
S3*          abstrahiert gezeigter Ausgangsschalter
S3           Ausgangsschalter
S3x          Modulstrangzusatzschalter des Modulstrangs x
S4           Zusatzausgangsschalter
S4'          Wechselrichterausgangsschalter
S41', S42'   Wechselrichterausgangsschalter
S4x          Zusatzmodulstrangschalter des Modulstrangs x
S81, S82     Modulstrangschalter des Modulstrangs 1, 2
S8x, S8n     Modulstrangschalter des Modulstrangs x, n
S91, S92     Modulstrangschalter des Modulstrangs 1, 2
S9x, S9n     Modulstrangschalter des Modulstrangs x, n

Steller_11, Steller_12    Modulstrangsteller des Modulstrangs 1, 2
Steller_1x, Steller_1n    Modulstrangsteller des Modulstrangs x, n
Steller_1x'    phasenversetzt getakteter Modulstrangsteller des Modulstrangs x
Steller_2      Ausgangssteller
Steller_2'     phasenversetzt getakteter Ausgangssteller

U            Spannung
$U_A$        Wechselrichterspannung
$U_D$        Gleichspannung vom Monomodulstrang
$U_{G1}$, $U_{G2}$    individuelle Modulstrangspannung am Modulstrang 1, 2
$U_{Gx}$, $U_{Gn}$    individuelle Modulstrangspannung am Modulstrang x, n
$U_{MPP}$    Spannung im Punkt maximaler Leistungsabgabe
$U_{WR}$     Ausgangsspannung; Wechselrichterspannung

W1, W2, W3   DC-DC-Wandler
W1'          Wechselspannungsquelle/-senke

x            Ordnungsnummer eines Modulstrangs
X1.1, X1.2   Eingang 1, 2 der Anpassschaltung
X1.x, X1.n   Eingang x, n der Anpassschaltung
X2           angepasster zweiter Ausgangspotentialpunkt
X2'          angepasster dritter Ausgangspotentialpunkt
X3           gemeinsamer erster Ausgangspotentialpunkt
X4           positiver (bzw. negativer) Potentialpunkt des Zwischenkreises
X5           mittlerer Potentialpunkt des Zwischenkreises
Xi1, Xi2     interner Potentialpunkt der Anpassschaltung

**Patentansprüche**

1.  Schaltungsanordnung zum Abgreifen von elektrischer Leistung mehrerer Modulstränge (Mx) mit Leistungsversorgungsmodulen, wobei die Modulstränge (Mx) jeweils eine individuelle Modulstrangleistung ($P_{Gx}$), einen individuellen Modulstrangstrom ($I_{Gx}$) und eine individuelle Modulstrangspannung ($U_{Gx}$) bereitstellen; wobei

    - zumindest ein erster elektrischer Potentialpunkt von jedem der Modulstränge (Mx) an einem gemeinsamen ersten Ausgangspotentialpunkt (X3) der Schaltungsanordnung liegt;

- eine Anpassschaltung (10; 10') der Schaltungsanordnung mehrere separate Eingänge (X1.x) aufweist, an denen ein zweiter elektrischer Potentialpunkt von jedem der Modulstränge (Mx) anliegt;
- die Anpassschaltung (10; 10') derart ausgebildet ist, dass sie an ihrem Ausgang über einen angepassten zweiten Ausgangspotentialpunkt (X2) eine Ausgangsspannung ($U_{WR}$) so steuert oder regelt, dass

- ein Ausgangsstrom ($I_{WR}$) der Anpassschaltung (10; 10') mit einer maximalen Abweichung von 5% der Summe der individuellen Modulströme ($I_{Gx}$) entspricht und
- die Ausgangsspannung ($U_{WR}$) der Anpassschaltung (10; 10') zwischen der höchsten individuellen Modulstrangspannung ($U_{Gx}$) und der niedrigsten individuellen Modulstrangspannung ($U_{Gx}$) liegt;

- die Anpassschaltung (10; 10') für jeden der Modulstränge (Mx) einen Modulstrangschalter (S2x*) aufweist, über den der zweite elektrische Potentialpunkt von jedem der Modulstränge (Mx) an einen von zwei unterschiedlichen internen Potentialpunkten (Xi1, Xi2) der Anpassschaltung (10; 10') anlegbar ist; und
- die Anpassschaltung (10; 10') derart ausgebildet ist, dass sie das Potential des angepassten zweiten Ausgangspotentialpunkts (X2) mittels der Potentiale der zwei internen Potentialpunkte (Xi1; Xi2) steuert oder regelt.

2. Schaltungsanordnung nach Anspruch 1, wobei die Anpassschaltung (10; 10') eine gepulste Taktung für zumindest einen elektrischen Schalter (S1x, S1x1, S1x2. S2x*, S2x, S2x1, S2x2, S3*, S3, S31, S32, S3x1, S3x2, S4, S41, S42, S4x1, S4x2, S8x, S8x1, S8x2, S9x, S9x1, S9x2) bereitstellt, mit der der Zufluss der elektrischen Modulstrangleistungen ($P_{Gx}$) über die zweiten Potentialpunkte der Modulstränge (Mx) zu der Anpassschaltung (10; 10') steuerbar oder regelbar ist.

3. Schaltungsanordnung nach Anspruch 2, wobei parallel zu jedem Modulstrang (Mx) ein zugeordneter Kondensator (C1x) angeordnet ist, der derart ausgebildet ist, dass er die Modulstrangleistung ($P_{Gx}$) des zugeordneten Modulstrangs (Mx) zu vorbestimmten Zeitpunkten der gepulsten Taktung zwischenspeichert.

4. Schaltungsanordnung nach einem der Ansprüche 2 oder 3, wobei die Anpassschaltung (10; 10') zumindest ein Glättungselement (L1, L1x, L1x1, L1x2.L2, L21, L22, L3x, L3x1, L3x2) aufweist, mittels dessen die Anpassschaltung (10; 10')die getaktet über den jeweiligen zweiten Potentialpunkt an der Anpassschaltung (10; 10') anliegenden individuellen Modulstrangspannungen ($U_{Gx}$) auf die Ausgangsspannung ($U_{WR}$) am Ausgang der Anpassschaltung (10; 10') auf einen Wert regelt oder steuert, der zwischen der höchsten individuellen Modulstrangspannung ($U_{Gx}$) und der niedrigsten individuellen Modulstrangspannung ($U_{Gx}$) liegt.

5. Schaltungsanordnung nach einem der vorangegangenen Ansprüche, wobei zumindest ein Kondensator (C8) zwischen dem angepassten zweiten Ausgangspotentialpunkt (X2) und dem gemeinsamen ersten Ausgangspotentialpunkt (X3) angeordnet ist
und/oder
wobei die Schaltungsanordnung dafür ausgebildet ist, die individuellen Modulstrangleistungen ($P_{Gx}$) der Modulstränge (Mx) mit jeweils unterschiedlichen individuellen Modulstrangspannungen ($U_{Gx}$) abzugreifen.

6. Schaltungsanordnung nach einem der vorangegangenen Ansprüche, wobei die Schaltungsanordnung dafür ausgebildet und vorgesehen ist, die individuellen Modulstrangleistungen ($P_{Gx}$) der Modulstränge (Mx) jeweils in ihrem Punkt maximaler Leistungsabgabe (MPP) abzugreifen
und/oder
wobei die Anpassschaltung (10; 10') derart ausgebildet ist, dass sie die Ausgangsspannung ($U_{WR}$) auf einen Wert regelt oder steuert, der variabel in Abhängigkeit von den individuellen Modulstrangspannungen ($U_{Gx}$) ist.

7. Schaltungsanordnung nach einem der vorangegangenen Ansprüche, wobei die Anpassschaltung (10; 10') derart ausgebildet ist, dass sie die Ausgangsspannung ($U_{WR}$) zwischen dem gemeinsamen ersten Ausgangspotentialpunkt (X3) und dem angepassten zweiten Ausgangspotentialpunkt (X2) steuert oder regelt.

8. Schaltungsanordnung nach einem der Ansprüche 1 bis 6, wobei die Anpassschaltung (10') zweiteilig aufgebaut ist mit

- einem ersten Anpassschaltungsteil (10a) mit mehreren separaten Eingängen (X1.x), an denen die zweiten elektrischen Potentialpunkte von jedem der Modulstränge (Mx) anliegen, wobei der erste Anpassschaltungsteil (10a) derart ausgebildet ist, dass er den angepassten zweiten Ausgangspotentialpunkt (X2) einstellt oder regelt, und
- einem zweiten Anpassschaltungsteil (10b) mit mehreren separaten Eingängen (X1.x'), an denen dritte elektrische Potentialpunkte von jedem der Modulstränge (Mx) anliegen, wobei der zweite Anpassschaltungsteil (10b) derart ausgebildet ist, dass er einen angepassten dritten Ausgangspotentialpunkt (X2') einstellt oder regelt; und wobei

die zweiteilige Anpassschaltung (10') derart ausgebildet ist, dass sie die Ausgangsspannung ($U_{WR}$) zwischen dem angepassten zweiten Ausgangspotentialpunkt (X2) und dem angepassten dritten Ausgangspotentialpunkt (X2') steuert oder regelt.

9. Schaltungsanordnung nach einem der vorangegangenen Ansprüche, wobei der Ausgang der Anpassschaltung (10; 10 ') an einen DC-AC-Wechselrichter (50; 50') angeschlossen ist.
und/oder
wobei die Anpassschaltung (10; 10') modular ausgebildet ist.

10. Schaltungsanordnung nach einem der vorangegangenen Ansprüche, wobei die Anpassschaltung (10; 10') einen DC-DC-Steller für zwei Modulstränge (M1, M2) aufweist, der zwischen die zweiten elektrischen Potentialpunkte der Modulstränge (M1, M2) geschaltet ist.

11. Schaltungsanordnung nach einem der Ansprüche 1 bis 9, wobei die Anpassschaltung (10; 10') für jeden der Modulstränge (Mx) ein Induktionselement (L1x, L3x; L1x1, L1x2, L3x11, L3x2) aufweist.

12. Schaltungsanordnung nach einem der vorangegangenen Ansprüche, wobei die Modulstrangschalter (S2x*) der Modulstränge (Mx) als getaktete Schalter (S1x, S1x1, S1x2, S2x, S2x1, S2x2, S8x, S8x1, S8x2, S9x, S9x1, S9x2) ausgebildet sind..

13. Schaltungsanordnung nach den Ansprüchen 11 und 12, wobei die Anpassschaltung (10; 10') derart ausgebildet ist, dass sie das Induktionselement (L1x, L3x; L1x1, L1x2, L3x11, L3x2) von jedem Modulstranges (Mx) über den zugehörigen Schalter (S1x, S1x1, S1x2, S2x, S2x1, S2x2, S8x, S8x1, S8x2, S9x, S9x1, S9x2) an eines der beiden internen Potentialpunkte (Xi1; Xi2) der Anpassschaltung schaltet.

14. Schaltungsanordnung nach einem der Ansprüche 12 oder 13, wobei die Anpassschaltung (10; 10') derart ausgebildet ist, dass sie die Spannung ($Uc_4$) zwischen den beiden internen Potentialpunkten (Xi1, Xi2) so regelt oder steuert, dass sie mit einer maximalen Abweichung von 50% der Differenz zwischen der höchsten individuellen Modulstrangspannung ($U_{Gx}$) und der niedrigsten individuellen Modulstrangspannung ($U_{Gx}$) beträgt.

15. Verfahren zum Abgreifen von elektrischer Leistung mehrerer Modulstränge (Mx) mit Leistungsversorgungsmodulen, wobei die Modulstränge (Mx) jeweils eine individuelle Modulstrangleistung ($P_{Gx}$), einen individuellen Modulstrangstrom ($I_{Gx}$) und eine individuelle Modulstrangspannung ($U_{Gx}$) bereitstellen; mit den Schritten

- Bereitstellen eines gemeinsamen ersten Ausgangspotentialpunkts (X3), an dem zumindest ein erster elektrischer Potentialpunkt von jedem der Modulstränge (Mx) anliegt;
- Steuern oder Regeln eines Potentials eines zweiten elektrischen Potentialpunkts von jedem der Modulstränge (Mx) zu einem angepassten zweiten Ausgangspotentialpunkt (X2) derart, dass

- ein Ausgangsstrom ($I_{WR}$) bereitgestellt wird, der mit einer maximalen Abweichung von 5% der Summe der individuellen Modulströme ($I_{Gx}$) entspricht und
- eine Ausgangsspannung ($U_{WR}$) bereitgestellt wird, die zwischen der höchsten individuellen Modulstrangspannung ($U_{Gx}$) und der niedrigsten individuellen Modulstrangspannung ($U_{Gx}$) liegt;

wobei
- der zweite elektrische Potentialpunkt von jedem der Modulstränge (Mx) über einen Modulstrangschalter (S2x*) für jeden der Modulstränge (Mx) an einen von zwei unterschiedlichen internen Potentialpunkten (Xi1, Xi2) der Anpassschaltung (10; 10')angelegt wird und
- das Potential des angepassten zweiten Ausgangspotentialpunkts (X2) mittels der Potentiale der zwei internen Potentialpunkte (Xi1; Xi2) gesteuert oder geregelt wird.

**EP 2 911 284 B1**

**Claims**

1. A circuit arrangement for picking up electric power from multiple module strands (Mx) comprising power supply modules, wherein the module strands (Mx) each provide an individual module strand power ($P_{Gx}$), an individual module strand current ($I_{Gx}$) and an individual module strand voltage ($U_{Gx}$); wherein

   - at least one first electric potential point of each of the module strands (Mx) is located at a common first output potential point (X3) of the circuit arrangement;
   - an adapter circuit (10; 10') of the circuit arrangement has multiple separate inputs (X1.x) that adjoin a second electric potential point of each of the module strands (Mx);
   - the adapter circuit (10; 10') is designed to control an output voltage ($U_{WR}$) at the output thereof via an adapted second output potential point (X2) such that

     - an output current ($I_{WR}$) of the adapter circuit (10; 10') corresponds to the sum of the individual module currents ($I_{Gx}$) with a maximum deviation of 5% and
     - the output voltage ($U_{WR}$) of the adapter circuit (10; 10') is between the highest individual module strand voltage ($U_{Gx}$) and the lowest individual module strand voltage ($U_{Gx}$);

   - the adapter circuit (10; 10') has a module strand switch (S2x*) for each of the module strands (Mx), by means of which switch the second electric potential point of each of the module strands (Mx) can be made to adjoin one of two different internal potential points (Xi1, Xi2) of the adapter circuit (10; 10'); and
   - the adapter circuit (10; 10') is designed in such a way to control the potential of the adapted second output potential point (X2) by means of the potentials of the two internal potential points (Xi1; Xi2).

2. The circuit arrangement according to claim 1, wherein the adapter circuit (10; 10') provides pulsed clocking for at least one electric switch (S1x, S1x1, S1x2, S2x*, S2x, S2x1, S2x2, S3*, S3, S31, S32, S3x1, S3x2, S4, S41, S42, S4x1, S4x2, S8x, S8x1, S8x2, S9x, S9x1, S9x2), by means of which the inflow of electric module strand powers ($P_{Gx}$) via the second potential points of the module strands (Mx) to the adapter circuit (10; 10') can be controlled or regulated.

3. The circuit arrangement according to claim 2, wherein an assigned capacitor (C1x) is disposed in parallel with each module strand (Mx), which capacitor is designed in such a way to temporarily store the module strand power ($P_{Gx}$) of the assigned module strand (Mx) at specific times during the pulsed clocking.

4. The circuit arrangement according to any one of claims 2 or 3, wherein the adapter circuit (10; 10') has at least one smoothing element (L1, L1x, L1x1, L1x2, L2, L21, L22, L3x, L3x1, L3x2), by means of which the adapter circuit (10; 10') controls or regulates the individual module strand voltages ($U_{Gx}$) applied to the adapter circuit (10; 10') in a clocked manner via the relevant second potential point to the output voltage ($U_{WR}$) at the output of the adapter circuit (10; 10') to a value that is between the highest individual module strand voltage ($U_{Gx}$) and the lowest individual module strand voltage ($U_{Gx}$).

5. The circuit arrangement according to any one of the preceding claims, wherein at least one capacitor (C8) is disposed between the adapted second output potential point (X2) and the common first output potential point (X3) and/or wherein the circuit arrangement is designed to pick up the individual module strand powers ($P_{Gx}$) from the module strands (Mx) each having different individual module strand voltages ($U_{Gx}$).

6. The circuit arrangement according to any one of the preceding claims, wherein the circuit arrangement is designed and provided for picking up the individual module strand powers ($P_{Gx}$) from the module strands (Mx) in each case at the maximum power point (MPP) thereof and/or wherein the adapter circuit (10; 10') is designed in such a way to control the output voltage ($U_{WR}$) to a value that is variable depending on the individual module strand voltages ($U_{Gx}$).

7. The circuit arrangement according to any one of the preceding claims, wherein the adapter circuit (10; 10') is designed in such a way to control the output voltage ($U_{WR}$) between the common first output potential point (X3) and the adapted second output potential point (X2).

25

8. The circuit arrangement according to any one of claims 1 to 6, wherein the adapter circuit (10') is formed of two parts, comprising

- a first adapter circuit part (10a) having multiple separate inputs (X1.x) which adjoin the second electric potential points of each of the module strands (Mx), wherein the first adapter circuit part (10a) is designed in such a way to adjust or regulate the adapted second output potential point (X2),
and
- a second adapter circuit part (10b) having multiple separate inputs (X1.x') which adjoin third electric potential points of each of the module strands (Mx), wherein the second adapter circuit part (10b) is designed in such a way to adjust or regulate an adapted third output potential point (X2'); and wherein

the two-part adapter circuit (10') is designed in such a way to control the output voltage ($U_{WR}$) between the adapted second output potential point (X2) and the adapted third output potential point (X2').

9. The circuit arrangement according to any one of the preceding claims, wherein the output of the adapter circuit (10; 10') is connected to a DC-AC converter (50; 50'),
and/or
wherein the adapter circuit (10; 10') is designed to be modular.

10. The circuit arrangement according to any one of the preceding claims, wherein the adapter circuit (10; 10') has a DC-DC converter for two module strands (M1, M2) that is connected between the second electric potential points of the module strands (M1, M2).

11. The circuit arrangement according to any one of claims 1 to 9, wherein the adapter circuit (10; 10') has an induction element (L1x, L3x; L1x1, L1x2, L3x11, L3x2) for each of the module strands (Mx).

12. The circuit arrangement according to any one of the preceding claims, wherein the module strand switches (S2x*) of the module strands (Mx) are designed as clocked switches (S1x, S1x1, S1x2, S2x, S2x1, S2x2, S8x, S8x1, S8x2, S9x, S9x1, S9x2).

13. The circuit arrangement according to claims 11 and 12, wherein the adapter circuit (10; 10') is designed in such a way to connect the induction element (L1x, L3x; L1x1, L1x2, L3x11, L3x2) of each module strand (Mx) to one of the two internal potential points (Xi1; Xi2) of the adapter circuit via the associated switch (S1x, S1x1, S1x2, S2x, S2x1, S2x2, S8x, S8x1, S8x2, S9x, S9x1, S9x2).

14. The circuit arrangement according to any one of claims 12 or 13, wherein the adapter circuit (10; 10') is designed in such a way to control the voltage ($U_{C4}$) between the two internal potential points (Xi1, Xi2) such that said voltage is between the highest individual module strand voltage ($U_{Gx}$) and the lowest individual module strand voltage ($U_{Gx}$) with a maximum deviation of 50% of the difference.

15. A method for picking up electric power from multiple module strands (Mx) having power supply modules, wherein the module strands (Mx) each provide an individual module strand power ($P_{Gx}$), an individual module strand current ($I_{Gx}$) and an individual module strand voltage ($U_{Gx}$); comprising the steps of

- providing a common first output potential point (X3) which adjoins at least one first electric potential point of each of the module strands (Mx);
- controlling or regulating a potential of a second electric potential point of each of the module strands (Mx) to an adapted second output potential point (X2) such that

- an output current ($I_{WR}$) is provided, which corresponds to the sum of the individual module currents ($I_{Gx}$) with a maximum deviation of 5% and
- an output voltage ($U_{WR}$) is provided, which is between the highest individual module strand voltage ($U_{Gx}$) and the lowest individual module strand voltage ($U_{Gx}$);

wherein
- the second electric potential point of each of the module strands (Mx) is made to adjoin one of two different internal potential points (Xi1, Xi2) of the adapter circuit (10; 10') via a module strand switch (S2x*) for each of the module strands (Mx) and

- the potential of the adapted second output potential point (X2) is controlled or regulated by means of the potentials of the two internal potential points (Xi1; Xi2).

## Revendications

1. Une circuiterie pour prélever de la puissance électrique à partir de plusieurs chaînes de modules (Mx) avec des modules d'alimentation en courant, sachant que les chaînes de modules (Mx) fournissent chacune une puissance de chaîne de module individuelle ($P_{Gx}$), un courant de chaîne de module individuel ($I_{Gx}$) et une tension de chaîne de module individuel ($U_{Gx}$) ; sachant que

   - au moins un premier point de potentiel électrique de chacune des chaînes de modules (Mx) est situé au niveau d'un premier point de potentiel de sortie commun (X3) du circuit ;
   - un circuit d'adaptation (10 ; 10') de la circuiterie présente une pluralité d'entrées séparées (X1.x) auxquelles est appliqué un deuxième point de potentiel électrique de chacune des chaînes de modules (Mx) ;
   - le circuit d'adaptation (10 ; 10') est conçu de manière qu'il commande ou régule une tension de sortie ($U_{WR}$) à sa sortie via un deuxième point de potentiel de sortie adapté (X2), de manière que

      - un courant de sortie ($I_{WR}$) du circuit d'adaptation (10 ; 10') correspond à la somme des courants individuels des modules ($I_{Gx}$) avec un écart maximal de 5%, et que
      - la tension de sortie ($U_{WR}$) du circuit d'adaptation (10 ; 10') est comprise entre la tension de chaîne individuelle ($U_{Gx}$) la plus élevée et la tension de chaîne individuelle ($U_{Gx}$) la plus basse ;

   - le circuit d'adaptation (10 ; 10') présente, pour chacune des chaînes de module (Mx), un commutateur de chaîne de module (S2x*, par l'intermédiaire duquel le deuxième point de potentiel électrique de chacune des chaînes de module (Mx) peut être appliqué à un de deux points de potentiel interne différents (Xi1, Xi2) du circuit d'adaptation (10 ; 10') ; et que
   - le circuit d'adaptation (10 ; 10') est agencé pour commander ou réguler le potentiel du deuxième point de potentiel de sortie (X2) adapté au moyen des potentiels des deux points de potentiel internes (Xi1 ; Xi2).

2. La circuiterie d'après la revendication 1, sachant que le circuit d'adaptation (10 ; 10') fournit une temporisation pulsée pour au moins un commutateur électrique (S1x, S1x1, S1x2, S2x*, S2x, S2x1, S2x2, S3*, S3, S31, S32, S3x1, S3x2, S4, S41, S42, S4x1, S4x2, S8x, S8x1, S8x2, S9x, S9x1, S9x2) par lequel l'afflux des puissances de chaîne de modules ($P_{Gx}$) peut être commandé ou régulé via les deuxièmes points de potentiel des chaînes de modules (Mx) vers le circuit d'adaptation (10 ; 10').

3. La circuiterie d'après la revendication 2, sachant qu'on dispose parallèlement à chaque chaîne de modules (Mx) un condensateur (C1x) associé qui est conçu de manière qu'il mémorise temporairement à des moments prédéterminés de la temporisation pulsée la puissance de chaîne de modules ($P_{Gx}$) de la chaîne de modules (Mx) associée.

4. La circuiterie d'après l'une des revendications 2 ou 3, sachant que le circuit d'adaptation (10 ; 10') comprend au moins un élément de lissage (L1, L1x, L1x1, L1x2, L2, L21, L22, L3x, L3x1, L3x2), au moyen duquel le circuit d'adaptation (10 ; 10') régule ou commande les tensions individuelles de chaîne de modules ($U_{Gx}$), appliquées au circuit d'adaptation (10 ; 10') de manière temporisée par le deuxième point potentiel respectif, à la tension de sortie ($U_{WR}$) présente à la sortie du circuit d'adaptation (10 ; 10') à une valeur comprise entre la tension individuelle de chaîne de modules la plus élevée ($U_{Gx}$) et la tension individuelle de chaîne de modules la plus basse ($U_{Gx}$).

5. La circuiterie d'après l'une des revendications précédentes, sachant qu'au moins un condensateur (C8) est agencé entre le deuxième point de potentiel de sortie (X2) adapté et le premier point de potentiel de sortie (X3) commun, et/ou que
   la circuiterie est conçue pour prélever ou encore capter (*abgreifen*) les puissances individuelles de chaînes de modules ($P_{Gx}$) des chaînes de modules (Mx) avec des tensions individuelles de chaînes de modules (UGx) respectivement différentes.

6. La circuiterie d'après l'une des revendications précédentes, sachant que la circuiterie est conçue et prévue pour prélever les puissances individuelles de chaînes de modules ($P_{Gx}$) des chaînes de modules (Mx) respectivement en leur point de puissance de sortie maximale (MPP), et/ou
   sachant que le circuit d'adaptation (10 ; 10') est conçu pour réguler ou commander la tension de sortie ($U_{WR}$) à une valeur qui est variable en fonction des tensions individuelles de chaînes de modules ($U_{Gx}$).

**7.** La circuiterie d'après l'une des revendications précédentes, sachant que le circuit d'adaptation (10 ; 10') est conçu de manière qu'il commande ou régule la tension de sortie ($U_{WR}$) entre le premier point de potentiel de sortie commun (X3) et le deuxième point de potentiel de sortie adapté (X2).

**8.** La circuiterie d'après l'une des revendications de 1 à 6, sachant que le circuit d'adaptation (10') est construit en deux parties avec

- une première partie de circuit d'adaptation (10a) présentant plusieurs entrées séparées (X1.x) auxquelles sont raccordés les deuxièmes points de potentiel électrique de chacune des chaînes de modules (Mx), sachant que la première partie de circuit d'adaptation (10a) est conçue de manière qu'elle ajuste ou régule le deuxième point de potentiel de sortie (X2) adapté, et
- une deuxième partie de circuit d'adaptation (10b) présentant plusieurs entrées séparés (X1.x') auxquelles sont raccordés des troisièmes points de potentiel électrique de chacune des chaînes de modules (Mx), sachant que la deuxième partie de circuit d'adaptation (10b) est conçue de manière qu'elle ajuste ou règule un troisième point de potentiel de sortie ajusté (X2') ; et sachant que

le circuit d'adaptation en deux parties (10') est agencé pour commander ou réguler la tension de sortie ($U_{WR}$) entre le deuxième point de potentiel de sortie adapté (X2) et le troisième point de potentiel de sortie adapté (X2').

**9.** La circuiterie d'après l'une des revendications précédentes, sachant que la sortie du circuit d'adaptation (10 ; 10') est connectée à un onduleur DC-AC (50 ; 50').
et/ou
sachant que le circuit d'adaptation (10 ; 10') est de conception modulaire.

**10.** La circuiterie d'après l'une des revendications précédentes, sachant que le circuit d'adaptation (10 ; 10') présente un convertisseur DC-DC pour deux chaînes de modules (M1, M2) qui est relié entre les deuxièmes points de potentiel électrique des chaînes de modules (M1, M2).

**11.** La circuiterie d'après l'une des revendications 1 à 9, sachant que le circuit d'adaptation (10 ; 10') présente pour chacune des chaînes de modules (Mx) un élément d'induction (L1x, L3x ; L1x1, L1x2, L3x11, L3x2).

**12.** La circuiterie d'après l'une des revendications précédentes, sachant que les commutateurs de chaîne de module (S2x*) des chaînes de modules (Mx) sont conçus comme commutateurs cadencés (S1x, S1x1, S1x2, S2x, S2x1, S2x2, S8x, S8x1, S8x2, S9x, S9x1, S9x2).

**13.** La circuiterie d'après les revendications 11 et 12, sachant que le circuit d'adaptation (10 ; 10') est conçu de manière à connecter l'élément d'induction (L1x, L3x ; L1x1, L1x2, L3x11, L3x2) de chaque chaîne de modules (Mx) via le commutateur associé (S1, S1x1, S1x2, S2x, S2x1, S2x2, S8x, S8x1, S8x2, S9x, S9x1, S9x2) à un des deux points de potentiel internes (Xi1 ; Xi2) du circuit d'adaptation.

**14.** La circuiterie d'après l'une des revendications 12 ou 13, sachant que le circuit d'adaptation (10 ; 10') est conçu pour réguler ou commander la tension ($U_{C4}$) entre les deux points de potentiel interne (Xi1, Xi2) de manière qu'elle corresponde avec un écart maximum de 50% à la différence entre la tension individuelle de chaîne de modules ($U_{Gx}$) la plus élevée et la tension individuelle de chaîne de modules ($U_{Gx}$) la plus basse.

**15.** Un procédé pour prélever de la puissance électrique à partir d'une pluralité de chaînes de modules (Mx) avec des modules d'alimentation en courant,
sachant que les chaînes de modules (Mx) fournissent chacune une puissance de chaîne de module individuelle ($P_{Gx}$), un courant de chaîne de module individuel ($I_{Gx}$) et une tension de chaîne de module individuel ($U_{Gx}$) ; comprenant les étapes suivantes :

- fournir un premier point de potentiel de sortie commun (X3) auquel est appliqué au moins un premier point de potentiel électrique de chacune des chaînes de modules (Mx);
- commander ou réguler un potentiel d'un deuxième point de potentiel électrique de chacune des chaînes de modules (Mx) à un deuxième point de potentiel de sortie (X2) adapté de manière que

- un courant de sortie ($I_{WR}$)soit fourni, qui correspond à la somme des courants individuels des modules ($I_{Gx}$) avec un écart maximal de 5%, et que
- une tension de sortie ($U_{WR}$) soit fournie, qui est comprise entre la tension de chaîne individuelle ($U_{Gx}$) la plus élevée et la tension de chaîne individuelle ($U_{Gx}$) la plus basse ;

sachant que
- le deuxième point de potentiel électrique de chacune des chaînes de module (Mx) est appliqué par l'intermédiaire d'un commutateur de chaîne de module (S2x*) pour chacune des chaînes de module (Mx) à l'un de deux points de potentiel interne différents (Xi1, Xi2) du circuit d'adaptation (10 ; 10') et que
- le potentiel du deuxième point de potentiel de sortie (X2) adapté est commandé ou régulé au moyen des potentiels des deux points de potentiel internes (Xi1 ; Xi2).

Figur 1A

Figur 1B

Figur 1C

Figur 2

Figur 3

Figur 4

Figur 5A

Figur 5B

Figur 5C

Figur 5D

Figur 5E

Figur 6A

Figur 6B

Figur 6C

Figur 6D

Figur 6E

Figur 7A

Figur 7B

Figur 7C

Figur 8A

Figur 8B

Figur 8C

Steller_1x

Steller_1x'

## Figur 8D

Steller_1x

Steller_1x'

## Figur 9D

EP 2 911 284 B1

Figur 9A

Figur 9B

Figur 9C

40

Figur 10A

Figur 10B

Figur 10E

Figur 10C

Figur 10D

Figur 11

Figur 12

Figur 13

EP 2 911 284 B1

Figur 14

Leistungsfluss

Figur 15

Leistungsfluss

Figur16A

44

Figur 16B

Figur 16C

Figur 17A

Figur 17B

Figur 17C

Figur 17D

48

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012161527 A

- DE 102013007077

**In der Beschreibung aufgeführte Nicht-Patentliteratur**

- **VON LICCARDO F.** *Interleaved dc-dc Converters for Photovoltaic Modules*